# EUROPÄISCHE PATENTSCHRIFT

(11) **EP 4 232 703 B1**
(45) Veröffentlichungstag und Bekanntmachung des Hinweises auf die Patenterteilung: **25.02.2026**
(21) Anmeldenummer: 21790420.0
(22) Anmeldetag: 06.10.2021
(51) Int. Cl.: F03B 11/00, F03B 13/26, F03B 17/06

(54) **SYSTEM ZUR ENERGIESPEICHERUNG UND -RÜCKGEWINNUNG**
SYSTEM FOR STORING AND RECOVERING ENERGY
SYSTÈME DE STOCKAGE ET DE RÉCUPÉRATION D'ÉNERGIE

(30) Priorität: 21.10.2020 DE 102020127762
(43) Veröffentlichungstag der Anmeldung: 30.08.2023
(73) Patentinhaber: TAUSCHER, Johann, 1220 Wien (AT)
(72) Erfinder: TAUSCHER, Johann, 1220 Wien (AT)
(74) Vertreter: Schwarz & Partner Patentanwälte GmbH
(86) Internationale Anmeldenummer: PCT/EP2021/077625
(87) Internationale Veröffentlichungsnummer: WO 2022/084045

(56) Entgegenhaltungen:
- EP-A1- 3 321 501
- DE-A1- 102016 002 749
- GB-A- 2 503 490
- US-A1- 2020 080 531

## Beschreibung

Die Erfindung betrifft ein System zur Energiespeicherung und -rückgewinnung. Aus der Druckschrift EP 3 321 501 A1 ist ein System zur Energiespeicherung und -rückgewinnung bekannt, wobei mindestens ein Druckluftbehälter, mindestens ein mit dem Druckluftbehälter in Verbindung stehender Druckwasserbehälter und mindestens eine mit dem Druckwasserbehälter in Wirkverbindung stehende Turbine vorgesehen sind. Aus der Druckschrift GB 2 503 490 A ist ein Meereswellen Leistungsumwandler bekannt, wobei Meereswellen einen Kompressor antreiben, der Luft in einen Drucktank drückt und Luft aus dem Drucktank eine Turbine zum Betreiben eines Generators antreibt. Aus der Druckschrift US 2020/080531 A1 ist eine Vorrichtung und ein Verfahren zur Erzeugung von Elektrizität mit unter Druck stehendem Wasser und Luftströmungsmedien bekannt, wobei eine Turbine durch unter Druck stehendes Wasser angetrieben und überschüssige erzeugte Elektrizität zur Erzeugung von Druckluft verwendet wird, die im Bedarfsfall das Wasser zusätzlich mit Druck beaufschlagen kann.

Herkömmliche Wellenkraftwerke mit pneumatischen Kammern sind unterhalb des Meeresspiegels mit dem umliegenden Gewässer verbunden, sodass das Wasser auch einen Teil der sonst mit Luft gefüllten pneumatischen Kammer füllt. Kommt eine Welle auf die Kammer zu, drückt sie Wasser hinein und erhöht den Druck der Luft darin. Beim anschließenden Wellental fließt Wasser wieder aus der Kammer heraus und der Druck in der Kammer nimmt ab. Die Druckänderung und eine daraus resultierende Bewegung der Luft kann mittels Wells-Turbinen und Generator in elektrische Energie umgewandelt werden. Leider ist der Energiegewinn hierbei sehr gering. Wells-Turbinen sind so ausgelegt, dass sie sich in eine bestimmte Richtung drehen, unabhängig davon, von welcher Seite sie angeströmt werden. Dies wird mit symmetrischen Schaufeln realisiert. Daher ist der Wirkungsgrad dieser Turbinen wesentlich geringer als jener von vergleichbaren Turbinen mit asymmetrisch Schaufeln. Aus der Schaufelgeometrie resultiert auch eine fehlende Selbstanlauffähigkeit der Turbine und in weiterer Folge auch eine fehlende Schwarzstartfähigkeit des Wellenkraftwerks, weil elektrischer Strom zum Starten der Turbine benötigt wird. Ein wesentlicher Nachteil ist auch die Unstetigkeit der Energieabgabe, die mit jeder Welle schwankt. Die unterschiedlichen Größen und Geschwindigkeiten der Wellen stellt jedoch nicht nur für die Energiebereitstellung an sich ein Problem dar, sondern belasten auch die insbesondere beweglichen Komponenten des Systems enorm. Deswegen muss bei diesen mit häufigen Ausfällen gerechnet werden oder die Komponenten müssen mit enormen Sicherheiten dimensioniert werden, was im Allgemeinen mit einer Verschlechterung der restlichen Eigenschaften wie der Energieeffizienz des Systems einhergeht.

Der Erfindung liegt vor diesem Hintergrund die Aufgabe zugrunde, ein verbessertes System zur Energiespeicherung und -rückgewinnung bereitzustellen, sodass die erörterten Probleme vermieden sind.

### Zusammenfassung der Erfindung

Diese Aufgabe wird durch ein System zur Energiespeicherung und -rückgewinnung gemäß Anspruch 1 gelöst.

Mit den erfindungsgemäßen Maßnahmen geht der Vorteil einher, dass durch das Konstanthalten des Druckes, trotzt unstetiger Wellen, stetig Energie bereitgestellt werden kann. Während bei bekannten Wellenkraftwerken mit Wells-Turbinen, mit aufwändigen konstruktiven Maßnahmen versucht wird, Energie kurzfristig, beispielsweise in Schwungrädern zu speichern, um die Ungleichmäßigkeit der Wellen auszugleichen, wird bei dem hier präsentierten System die zur Energiebereitstellung eingesetzte Turbine mit konstantem Druck und damit unabhängig von der Größe oder Frequenz der Wellen betrieben.

Durch die Speicherung des Arbeitsgases in einem Druckspeicher ist das System schwarzstartfähig. Wells-Turbinen, wie sie in bekannten Systemen verwendet werden, müssen zum Starten in Bewegung versetzt werden. Hierfür kann beispielsweise der Generator, mit dem sie gekoppelt ist, kurzzeitig motorisch betrieben werden, um das System zum Laufen zu bringen. Dafür wird natürlich elektrische Energie benötigt. Ohne zusätzliche Energiespeicher ist das bekannte System also nicht schwarzstartfähig. Bei dem hier präsentierten System werden Wasserturbinen, insbesondere Pelton-Turbinen, eingesetzt, die selbständig anlaufen können. Auch die restlichen Systemkomponenten können leicht so angepasst werden, dass sie ohne elektrische Energie betrieben werden können. Das System benötigt für die Druckluftgenerierung also keine Energie aus dem Netz. Das System ist somit schwarzstartfähig.

Belastungsspitzen wirken hauptsächlich auf unbewegliche Systemkomponenten, die ohne großen konstruktiven und finanziellen Aufwand verstärkt ausgeführt werden können. Wichtige bewegliche Komponenten wie Turbinen, Lager usw. werden mit im wesentlichen konstanten Kräften belastet und können auch dementsprechend ausgelegt werden.

Mit den erfindungsgemäßen Maßnahmen geht also auch der Vorteil einher, dass in dem System Turbinen mit einem höheren Wirkungsgrad zur Energieumwandlung eingesetzt werden können. Bei dem hier vorgestellten System können also Wasserturbinen verwendet werden, die mit einem Wirkungsgrad von ca. 92 % (teilweise sogar noch mehr) überzeugen, während gute Wells-Turbinen einen Wirkungsgrad von gerade einmal 40% bis max. 70 % aufweisen.

Bei dem hier präsentierten System wird also die Bewegung des Wassers eines Gewässers in Verbindung mit dem System dafür genutzt Energie Bereitzustellen und zu speichern. Hierfür wird die Flüssigkeitsbewegung durch die Turbineneinheit hindurch ausschließlich durch den während eines Energiebereitstellungszyklus im Wesentlichen konstanten Arbeitsgasdruck bewerkstelligt, der von oben auf die Flüssigkeitsoberfläche wirkt und die Flüssigkeit aus dem Flüssigkeitsbehälter heraus und durch die Turbineneinheit in den hindurch befördert. Deswegen wird diese Flüssigkeit zur Abgrenzung zum Wasser das über Wellen, Gezeiten oder sonstige Variation der Füllhöhe oder des Drucks Energie in das System einbringt auch als Arbeitsflüssigkeit bezeichnet, um Verwechselungen zu vermeiden. Selbstverständlich kann es sich hierbei jedoch auch um Wasser, also Süß oder Salzwasser, oder auch besonders behandeltes, wie destilliertes Wasser usw. handeln.

Dort steht die von dem einen Flüssigkeitsbehälter in den anderen Flüssigkeitsbehälter übergeführte Arbeitsflüssigkeit sofort wieder für den nächsten Energiebereitstellungszyklus zur Verfügung.

Gemäß einer ersten Konfiguration des Systems kann die Arbeitsflüssigkeit mit Hilfe des Arbeitsgases wieder zurück in den ersten Flüssigkeitsbehälter befördert werden und dabei die Turbineneinheit durchströmen und dann im ersten Flüssigkeitsbehälter wieder für den nächsten Energiebereitstellungszyklus bereitstehen, wonach der Zyklus aus Hin- und Retourbeförderung der Arbeitsflüssigkeit von neuem beginnen kann.

Bei einer anderen Konfiguration des Systems kann die Arbeitsflüssigkeit von dem zweiten Flüssigkeitsbehälter in einen weiteren, also dritten Flüssigkeitsbehälter befördert werden, während elektrischer Strom generiert wird. Von dem dritten Flüssigkeitsbehälter aus kann die Arbeitsflüssigkeit in weiterer Folge mit Hilfe des Arbeitsgases wieder zurück in den ersten Flüssigkeitsbehälter befördert werden, während auch dabei wieder elektrischer Strom generiert wird, wonach dieser Zyklus von neuem beginnen kann.

Daher erschließt sich ein weiterer Vorteil darin, dass die Energieausbeute des Systems nicht durch das in dem Flüssigkeitsbehälter gespeicherte Flüssigkeitsvolumen beschränkt ist, da die Arbeitsflüssigkeit ja quasikontinuierlich in aufeinanderfolgenden Zyklen mit Hilfe des Arbeitsgases zwischen den jeweiligen Flüssigkeitsbehältern befördert wird, wobei während der jeweiligen Beförderungsphase immer elektrischer Strom generiert wird, sich also aneinander anschließenden Energiebereitstellungszyklen zu einer kontinuierlichen Energiebereitstellung kombinieren lassen.

Das System stellt also einen quasi-kontinuierlichen Beförderungsprozess bereit. In diesem Zusammenhang ist vorteilhaft hervorzuheben, dass die Beförderung der Arbeitsflüssigkeit mit konstantem Flüssigkeitsdruck erfolgt, weil ja auch der Arbeitsgasdruck des Arbeitsgases während das Energiebereitstellungszyklus konstant gehalten wird. Dies stellt sicher, dass sich die Turbine mir konstanter Frequenz dreht und folglich auch der mit Hilfe des mit der Turbine gekoppelten Generators erzeugte Strom mit im Wesentlichem konstanter Frequenz generiert wird und somit möglichst einfach in das Stromnetz eingespeist werden kann.

Das hier präsentierte System kann dank seiner geringen Anforderungen an die Umgebung an vielen Orten und in unterschiedlichsten Dimensionen umgesetzt werden. Das System kann zur Energieversorgung von kleinen entlegenen Inseln dienen, oder auch zur Versorgung von großen Städten und Metropolen verwendet werden. Hierfür kann es auch ergänzend zu anderen Kraftwerksystemen vorteilhaft eingesetzt werden. Durch die Möglichkeit der Energiespeicherung im System in Phasen, in denen ein Energieüberangebot besteht, und der Möglichkeit darauf in Phasen von übermäßigem Energiebedarf zurückgreifen zu können, können Bedarfs- und Angebotsschwankungen ausgeglichen werden. In Kombination mit anderen Kraftwerken kann das z.B. so passieren, dass bei einem Überangebot das andere Kraftwerk den Energiebedarf deckt und das hier vorgestellte System die Energie in Form von Druck im Druckspeicher speichert. Besteht anschließend ein Energiebedarf, kann das System parallel zum anderen Kraftwerk laufen. Auch ist eine Ausführungsform möglich, bei der Verdichter vorhanden sind, mit denen der Druckspeicher mittels externer Energie, beispielsweise aus einem anderen Kraftwerk, mit Arbeitsgas befüllt werden kann. Das System kann beispielsweise als Kraftwerk und Notenergiespeicher für entlegene Inseln dienen oder Unternehmen, die nahe an bewegten Gewässern errichtet sind, helfen, Energie bereitzustellen und zu speichern. Dementsprechend kann sich die Anforderung an die Arbeitsflüssigkeit nicht nur in der Menge, sondern auch in den Eigenschaften unterscheiden.

Es ist vorteilhaft, wenn die Arbeitsflüssigkeit in der Nähe des Betriebsbereichs, also beim Arbeitsgasdruck und bei Temperaturen, die im System auftreten, keine Phasenumwandlung durchläuft. Zumindest sollte die Dichte weitestgehend konstant sein, sodass der Druck im Flüssigkeitsbehälter sich nicht zufolge der Änderung der Dichte ändert.

Die Viskosität der Flüssigkeit ist bevorzugt so zu wählen, dass die Verluste im System zufolge der Flüssigkeitsbewegung möglichst gering sind. Es sind also im allgemeinen Flüssigkeiten von Vorteil, die im Betriebsbereich eine geringe Viskosität aufweisen. Im Allgemeinen erfüllt Wasser diese Anforderung und ist in vielen Anwendungsfällen, insbesondere bei großen Anlagen, eine gute Wahl. Es können, insbesondere bei kleineren Anlagen, aber auch Flüssigkeiten mit einer niedrigeren Viskosität vorteilhaft sein. So weisen z.B. die nicht brennbaren Flüssigkeiten Trichloräthen und Chloroform beispielsweise eine niedrigere Viskosität als Wasser auf. Wenn Flüssigkeiten mit einer anderen Viskosität als jener von Wasser verwendet werden, kann eine Anpassung der Turbine von Vorteil sein. Für solche Flüssigkeiten muss aus umwelttechnischen Überlegungen ein geschlossener Kreislauf zur Anwendung kommen.

Ein weiterer Aspekt, der in Bezug auf die Arbeitsflüssigkeit zu beachten sein kann, ist die Kavitation bzw. der Verdampfungsdruck. Fällt der statische Druck, der nach Bernoulli mit steigender Geschwindigkeit sinkt, unter den Verdampfungsdruck, kommt es zur Bildung von Gasbläschen (Kavitation). Das kann zu Schäden an der Turbine führen. Die Arbeitsflüssigkeit und die Turbineneinheit müssen also aufeinander abgestimmt sein. Der Effekt der Kavitation ist hauptsächlich bei Kaplanturbinen und Francistrubinen zu berücksichtigen. Solche Turbinen können jedoch unter Beachtung ihrer spezifischen Eigenschaften natürlich auch in diesem System zur Anwendung kommen. So kann z.B. eine Kaplanturbine bei einem Druck des Arbeitsgases von nur 10 Bar (dies entspricht 100 Meter Wassersäule) zur Anwendung kommen.

Bedingt durch den Umstand, dass bei diesem System die Arbeitsflüssigkeit permanent in einem abgeschlossenen Systembereich bleibt, kann hier also, anders als bei anderen Systemen, nicht nur die Turbineneinheit auf die Arbeitsflüssigkeit ausgelegt werden, sondern auch die Arbeitsflüssigkeit so gewählt werden, dass optimale aufeinander abgestimmte Verhältnisse vorliegen. Diese Tatsache öffnet, ähnlich wie bei der Nutzung von Kältemittel in Kältemaschinen, eine Vielzahl von neuen Möglichkeiten beim Einstellen bzw. Definieren der Systemeigenschaften. Somit sind hier gedanklich auch neue Flüssigkeiten und Flüssigkeitskombinationen mitberücksichtigt, die sich für den Fachmann aufgrund der hier vermittelten Lehre erschließen.

Die Abmessungen eines Flüssigkeitsbehälters können an die zu erzeugenden elektrische Energie angepasst sein, also z.B. für lange Energiebereitstellungszyklen angepasst sein. So können sich bei diesem System beispielsweise auch eine oder einige Million(en) Kubikmeter Arbeitsflüssigkeit im Flüssigkeitsspeicher befinden. Bei diesen Massen können die Kosten der Arbeitsflüssigkeit von wesentlicher Bedeutung sein. Das System kann jedoch auch auf kürzere Energiebereitstellungszyklen optimiert sein und somit einen entsprechend kleinen Flüssigkeitsbehälter aufweisen.

Weiterhin kann zu beachten sein, dass bei eventuellen anderen, offenen Systemen, bei denen die Arbeitsflüssigkeit mit der Umwelt in Verbindung steht, und damit immer auch ein Flüssigkeitsverbrauch bzw. eine Abgabe in die Umwelt einhergeht, die Auswahl der Arbeitsflüssigkeit sehr eingeschränkt ist. Andere Arbeitsflüssigkeiten als Wasser sind bei diesen offenen Systemen kaum denkbar, weil einerseits die Kosten für eine Flüssigkeit, die Verbraucht wird, bei anderen Arbeitsflüssigkeiten als Wasser enorm wären und andererseits viele dieser Arbeitsflüssigkeiten die Umwelt belasten würden.

Bei dem erfindungsgemäßen System können jedoch auch andere Flüssigkeiten, als Wasser mit unterschiedlichen vorteilhaften Eigenschaften verwendet werden, wie bereits im Detail erörtert.

Bei verhältnismäßig kleinem Flüssigkeitsvolumen können neben Wasser auch andere Flüssigkeiten vorteilhaft sein, die die zuvor genannten Eigenschaften aufweisen aber auch zum Beispiel dadurch überzeugen, dass sie nicht oder nur wenig verdampfen, oder dadurch überzeugen, dass sie bessere korrosive Eigenschaften aufweisen. Demgegenüber kann bei verhältnismäßig größeren Flüssigkeitsvolumen der Einsatz von Wasser vorteilhaft sein, weil diese Arbeitsflüssigkeit unverhältnismäßig günstig und leicht verfügbar ist. Hierbei kann beispielsweise Süß- oder Salzwasser verwendet werden und es kann auch das Wasser des umliegenden Gewässers genutzt werden. Es kann besonders vorteilhaft sein, wenn Süßwasser bzw. salzarmes Wasser, verwendet wird, auch wenn das umliegende Gewässer salzhaltig bzw. salzhaltiger ist, weil so die Komponenten im System vor dem Salzwasser in Hinblick auf Korrosion und Verschleiß geschützt werden. Weil die Arbeitsflüssigkeit in einer bevorzugten Ausführungsform jedoch weitestgehend im System bleibt, da es sich um einen großteils geschlossenen Kreislauf handelt, ist es auch hier möglich, durch Zusätze die Eigenschaften preiswert an den jeweiligen Betriebsbereich anzupassen. So können beispielsweise Frostschutzmittel, wie zum Beispiel Glykole, dem Wasser, das die Arbeitsflüssigkeit bildet, zugefügt werden, um das Gefrieren der Arbeitsflüssigkeit zu vermeiden. Die Verdichtungsflüssigkeit gefriert durch die permanente Bewegung und die durch die Verdichtung freigesetzte Wärme weniger leicht als die Arbeitsflüssigkeit, die mit einem, im wesentlichen konstanten Druck beaufschlagt wird. Durch die Zugabe von Frostschutzmittel kann das System also auch für kalte Umgebungsbedingungen angepasst werden. Auch die Zugabe von Korrosionsschutz kann vorteilhaft sein.

Der zumindest eine Flüssigkeitsbehälter kann aus verschiedensten Materialien gefertigt sein, solange er den Arbeitsflüssigkeits- und Arbeitsgasdruck zuzüglich der üblichen konstruktiven Maßnahmen und Sicherheiten aushält und mit dem Arbeitsgas und der Arbeitsflüssigkeit verträglich ist, also z.B. keine Korrosion zu erwarten ist. So können beispielsweise Stahl- oder Betonbehälter zum Einsatz kommen. Auch ein Aufbau aus mehreren miteinander kombinierten Materialien oder auch Verbundmaterialein ist möglich. So kann der Flüssigkeitsbehälter beispielsweise aus einer mechanisch stabilen Strukturschicht, wie beispielsweise aus Beton bzw. Stahlbeton bestehen, und im inneren dieser Strukturschicht eine arbeitsflüssigkeits- und arbeitsgasundurchlässige sowie chemisch resistente Schutzschicht aus beispielsweise Polymeren und/oder Metall(en) bzw. metallischen Legierungen aufweisen. Diese Materialwahl bzw. Materialkombination kann auch bei dem Druckspeicher und beim Verdichtungsbehälter verwendet werden.

Der zumindest eine Flüssigkeitsbehälter, wie im Übrigen auch optional die weiteren Komponenten des Systems, können z.B. teilweise oder auch vollständig unterirdisch angeordnet sein.

Auch die Verwendung von natürlichen Untergrundspeichern als Flüssigkeitsbehälter ist möglich. Der Arbeitsgasdruck kann hierbei auf die entsprechenden geologischen Gegebenheiten ausgelegt werden.

Die verschiedenen Flüssigkeitsbehälter müssen nicht das exakt gleiche Volumen aufweisen. Es muss lediglich ein Arbeits-Flüssigkeitsvolumen definiert werden, dass von dem einen Flüssigkeitsbehälter durch die Turbineneinheit in den anderen Flüssigkeitsbehälter befördert werden kann. Hierbei ist es Vorteilhaft, wenn das Arbeits-Flüssigkeitsvolumen dem Volumen des kleinsten Flüssigkeitsbehälters entspricht, sodass ein möglichst großes Arbeits-Flüssigkeitsvolumen pro Energiebereitstellungszyklus genutzt werden kann.

Weiterhin kann es von Vorteil sein, wenn die Flüssigkeitsbehälter, die ein größeres Volumen als das Arbeits-Flüssigkeitsvolumen aufweisen, mit mehr Arbeitsflüssigkeit befüllt werden, also mit einem Rest-Flüssigkeitsvolumen das der Differenz zwischen dem Volumen des Behälters und dem Arbeits-Flüssigkeitsvolumen entspricht, sodass das maximale Arbeitsgas-Volumen, das dem Arbeits-Flüssigkeitsvolumen entspricht, bei allen Flüssigkeitsbehältern gleich bzw. ähnlich ist. Dies erleichtert die Steuerung der Gasmengen-Befüllung der einzelnen Flüssigkeitsbehälter, da die einzublasende Gasmenge pro Energiebereitstellungzyklus immer die gleiche ist.

Auch kann es von Vorteil sein, wenn die Arbeitsflüssigkeit vor und/oder nach der Turbineneinheit so geführt wird, dass sie möglichst glatt und mit möglichst wenig Verwirbelungsverlusten geleitet wird.

Dies kann beispielsweise dadurch gelöst werden, dass der Flüssigkeitsbehälter ein Steigrohr aufweisen. Dies kann zu einem gleichmäßigeren Fluss der Arbeitsflüssigkeit aus dem Flüssigkeitsbehälter in die Turbineneinheit beitragen. Bei Anwendung des Steigrohres kann die Mündung des Steigrohres im Bodenbereich des Flüssigkeitsbehälters liegen, oder in einer pumpensumpfähnlichen Struktur bzw. Vertiefung münden, sodass die im Flüssigkeitsbehälter befindliche Arbeitsflüssigkeit fast vollständig durch den Druck des Arbeitsgases, das von oben auf die Arbeitsflüssigkeit einwirkt, aus dem Flüssigkeitsbehälter beförderbar ist.

Auch kann es von Vorteil sein, wenn die Mündung des Steigrohres einen Filter aufweist. Diese Maßnahme kann insbesondere bei der Nutzung von natürlichen Untergrundspeichern helfen, die Turbineneinheit vor Festkörpern zu schützen, die sich ggf. aus der Wand solcher natürlicher Untergrundspeicher lösen können. Diese Problematik stellt sich bei geschlossenen Systemen mit künstlichen Flüssigkeitsbehältern üblicherweise nicht.

Die Turbineneinheit kann auch mehrere Turbinen gleicher Größe aufweisen, die parallel geschaltet sind und die wahlweise zum Einsatz kommen können, um im kombinierten Betrieb die Leistung des Systems zu erhöhen. Die Turbineneinheit kann auch mehrere Turbinen unterschiedlicher Größe aufweisen, die parallel geschaltet sind und wahlweise zum Einsatz kommen können, um den Wirkungsgrad und/oder die Leistung und/oder die Kapazität des Systems zu verbessern bzw. zu optimieren. Diese können dann beispielsweise Bedarfsabhängig angesteuert werden.

Die Zulaufverrohrung und die Ablaufverrohrung muss hierfür entsprechend dimensioniert sein.

Bei diesem System können beispielsweise Gleichdruckturbinen, insbesondere Pelton-Turbinen verwendet werden. Diese überzeugen mit ihrem hohen Wirkungsgrad. Im Übrigen sei an dieser Stelle bereits erwähnt, dass je nach Konfiguration des Systems unterschiedliche Turbinen-Typen zum Einsatz kommen können, wie beispielsweise die bereits erwähnten.

Es ist möglich, einen oder mehrere Generatoren zu verwenden, die Turbinen und Generatoren auf einer oder mehreren Wellen zu betreiben und diese mit Getrieben und Kupplungen zu verbinden. In der Regel wird jedoch immer nur eine Turbine mit einem Generator auf einer Welle betrieben, dies horizontal oder vertikal.

Die Arbeitsgas-Bereitstellungseinheit speichert bei einem Energieüberangebot Energie, bevorzugt primär in Form von unter Druck stehendem Arbeitsgas in einem Druckspeicher. Bei Energiebedarf stellt die Arbeitsgas-Bereitstellungseinheit Arbeitsgas mit im Wesentlichen konstantem Druck zur Verfügung. Dieses Arbeitsgas kann dann wie beschreiben von den übrigen Systemkomponenten zur Energieumwandlung genutzt werden. Dafür ist die Arbeitsgas-Bereitstellungseinheit mit dem zumindest einen Flüssigkeitsbehälter verbunden. Dies bedeutet, dass die Arbeitsgas-Bereitstellungseinheit zu einer gewünschten Zeit Arbeitsgas mit einem im Wesentlichen konstanten Arbeitsgasdruck in den Flüssigkeitsbehälter, der initial mit Arbeitsflüssigkeit gefüllt ist, leiten kann, wo das Arbeitsgas während des Energiebereitstellungszyklus auf die Arbeitsflüssigkeit von oben einen konstanten Druck ausübt. Die Bereitstellung des Arbeitsgas mit dem gewünschten Arbeitsgasdruck kann durch eine Arbeitsgas-Bereitstellungseinheit-Steuereinheit oder durch eine zentrale Steuereinheit, die noch weitere Aufgaben übernimmt, gesteuert werden.

Als Arbeitsgas können unterschiedliche Gase oder Gasgemische verwendet werden, um bestimmte Systemeigenschaften zu verbessern. Im Allgemeinen bietet sich hierfür jedoch Luft, insbesondere Umgebungsluft, an.

Es können bei dem System Maßnahmen vorgesehen sein, die ein Verdunsten der Arbeitsflüssigkeit hintanhalten und somit die Wahrscheinlichkeit reduzieren, dass das Arbeitsgas (im Laufe der Zeit) Feuchtigkeit aufnimmt. Um das Arbeitsgas im Wesentlichen trocken zu halten können z.B. auch Gas-Entfeuchter vorgesehen sein.

Einen Teil der Arbeitsgas-Bereitstellungseinheit bildet der Verdichtungsbehälter in dem die Luft als Arbeitsgas durch das einströmende Wasser verdichtet wird. Das einströmende Wasser wird, um Verwechslungen mit der Arbeitsflüssigkeit zu vermeiden als Verdichtungsflüssigkeit bezeichnet. Die Verdichtungsflüssigkeit wird also im Allgemeinen durch die Umgebung vorgegeben und ist üblicherweise Wasser, also beispielsweise Salzwasser oder Süßwasser. Selbstverständlich können aber noch Maßnahmen getroffen werden, um die Eigenschaften der Verdichtungsflüssigkeit zu beeinflussen. So können beispielsweise insbesondere grobe Filter oder Gitter vorgesehen sein, die die Verdichtungsflüssigkeit von Treibgut befreien, insbesondere bevor dieses in den Verdichtungsbehälter eindringen kann.

Der Verdichtungsbehälter ist also so ausgelegt, dass er, zumindest solange die darin befindliche Luft einen Druck gleich oder höher dem Umgebungsdruck aufweist, bis auf die entsprechenden anschließenden Verrohrungen und Ventile, luftundurchlässig ist. Der Verdichtungsbehälter kann als pneumatische Kammer und/oder als pneumatischer Schacht ausgebildet sein. Der Verdichtungsbehälter ist so mit einem umliegenden Gewässer verbunden, dass die Verdichtungsflüssigkeit, zumindest zeitweise, in den Verdichtungsbehälter ein und ausfließen kann, sodass Druckänderungen im umliegenden Gewässer auf das Arbeitsgas im Verdichtungsbehälter komprimierend wirken und in weiterer Folge das komprimierte Arbeitsgasgas wie beschrieben gespeichert und genutzt werden kann. Die Druckänderung muss nicht periodisch erfolgen. Es ist möglich, dass sowohl große als auch sehr kleine Druck- und Füllstandsänderungen auftreten, die nacheinander auftreten, sich aber auch überlagern können. Das System erlaubt es durch die Speicherung des Druckes im Druckspeicher dennoch, dass, solange ausreichend Druck gespeichert wird, kontinuierlich elektrische Energie zur Verfügung gestellt wird. Konstruktiv muss der Verdichtungsbehälter so ausgelegt sein, dass er diesen Druckschwankungen mit ausreichender Sicherheit standhalten kann. Weiterhin ist die Kompatibilität der Werkstoffe mit der Verdichtungsflüssigkeit, also beispielsweise Salzwasser, zu beachten. Um dies und die zuvor genannte Forderung nach Dichtheit zu erfüllen bieten sich unterschiedliche Materialien und konstruktive Maßnahmen an. So kann der Verdichtungsbehälter beispielsweise aus Stahl, Beton oder Stahlbeton bestehen und gegebenenfalls noch mit chemisch resistenten Materialien beschichtet, überzogen oder ähnliches sein, also eine mechanische Stützstruktur und eine Schutzstruktur aufweisen. Durch die Höhe des Raumes des Verdichtungsbehälters über den mittleren Füllstand des umgebenden Gewässers lassen sich die Eigenschaften des Systems beeinflussen. Daher ist die Höhe bevorzugt nicht wesentlich höher als der maximale Füllstand, weil so ein höherer Druck erzeugt werden kann. Die Höhe ist aber bevorzugt auch nicht so niedrig, dass die Gefahr besteht, dass das gesamte Arbeitsgas herausgepresst wird. Der Druckverlauf in Abhängig von der Füllhöhe kann durch eine variable Querschnittsfläche des Verdichtungsbehälters parallel zum Verdichtungsflüssigkeitsspiegel ausgelegt bzw. mitbeeinflusst werden, wobei der Druck natürlich auch von der Auslegung des Einweg-Ventils und des Druckspeichers und den Ventilen des Druckspeichers abhängt. Es können auch Entlüftungsventile vorgesehen sein, um das Übersteigen eines bestimmten Druckes zu vermeiden. Bevorzugt ist der Querschnittsflächenverlauf des Verdichtungsbehälters so gewählt, dass er auf das Einweg-Ventil und den gewählten Druckspeicher abgestimmt ist.

Durch das erste Einweg-Ventil gelangt das Arbeitsgas in den Druckspeicher, von dem aus es anschließend wie beschrieben zur Energiebereitstellung herangezogen werden kann. Das Einweg-Ventil kann als passives oder aktives Ventil ausgeführt sein. So muss es sich nicht um ein klassisches Einweg-Ventil handeln, sondern es kann auch ein Ventil-System sein, wobei mittels Sensoren die Drücke im Verdichtungsbehälter und im Druckspeicher gemessen und von einer Steuereinheit verglichen werden. Die Steuereinheit kann als Teil des Ventil-Systems ausgeführt sein oder bevorzugt einer zentralen Steuereinheit zugehörig bzw. durch eine zentrale Steuereinheit realisiert sein. Weiterhin weißt dieses Ventil-System ein Ventil auf, dass geöffnet wird, wenn insbesondere durch die Steuereinheit festgestellt wird, dass der Druck im Verdichtungsbehälter höher ist als der Druck im Druckspeicher. Dadurch geht der Vorteil einher, dass ein strömungsfreundlicheres Ventil genutzt werden kann. Dieses Ventil-System kann in ähnlicher Form auch mechanisch bzw. strömungsmechanisch umgesetzt werden, wobei der Druckunterschied zwischen Verdichtungsbehälter und Druckspeicher zu einer Bewegung führt, die ein Ventil öffnet. Es kann sich auch um ein fluidisches Ventil, insbesondere um ein Teslaventil handeln. Diese Ventile überzeugen durch das Fehlen von beweglichen Teilen und damit durch einen geringen Verschleiß. Weiterhin kann das Einweg-Ventil auch so ausgelegt sein, dass es in bestimmten Fällen, insbesondere in sicherheitsrelevanten Fällen, auch so schaltbar ist, dass es Gas in die andere Richtung durchlässt. Es kann also beispielsweise so ausgelegt sein, dass es einen Überdruckschutz aufweist. Hierfür kann das Einweg-Ventil auch ein Ventil-System sein, dass aus mehreren Ventilen besteht, von denen eines einen Überdruckschutz darstellt. Auch kann es so ausgelegt sein, dass es so geschalten werden kann, dass es permanent geöffnet ist. So kann es, in Kombination mit den weiteren Ventilen, beispielsweise für Reparaturen so geschalten sein, dass der Einfluss des umliegenden Gewässers auf den Druck im Verdichtungsbehälter minimal gehalten wird, also insbesondere so, dass in Kombination mit anderen Ventilen der Druck im Verdichtungsbehälter dem Umgebungsdruck entspricht. Das Einwegventil kann auch aus einer Vielzahl von Ventilen bzw. Ventil-Systemen bestehen. Von diesen Ventilen bzw. Ventil-Systemen können abhängig von der Füllstandhöhe der Verdichtungsflüssigkeit auch einige von dieser bedeckt sein. So kann bei geringer Füllstandshöhe ein größerer Gasdurchsatz bewerkstelligt werden, weil viele Ventile vorhanden sind. Bei hoher Füllstandshöhe sind einige Ventile von der Verdichtungsflüssigkeit bedeckt. Durch die restlichen Ventile kann das Arbeitsgas jedoch immer noch fließen. Ventile, die von der Verdichtungsflüssigkeit bedeckt sind, öffnen in dieser Ausführungsform nicht. Hierfür können weitere Sensoren vorgesehen sein. Diese Sensoren können beispielsweise optische Sensoren sein, mechanische Füllstandsensoren, Widerstandssensoren usw.. So können Strömungsverluste verringert werden, weil so immer ein maximal möglicher Strömungs-Durchsatz genutzt werden kann.

Der Druckspeicher kann äquivalent zu den Flüssigkeitsbehältern und dem Verdichtungsbehälter aus verschiedensten Materialien oder Materialkombinationen bestehen, solange er den Anforderungen mit ausreichenden Sicherheiten genügt. Der Druckspeicher muss mit ausreichender Reserve dem Speichergasdruck, der beispielsweise 100 Bar betragen kann, standhalten. Auch hier sind beispielsweise natürlichen Untergrundspeichern möglich. Aber auch Stahlspeicher, Betonspeicher, Stahlbetonspeicher oder ähnliche können beispielsweise überirdisch oder unterirdisch umgesetzt werden. Auch Kombinationen der genannten Speicher mit beispielsweise Polymeren als Wandbeschichtung oder in das Wandmaterial integriert zur Verbesserung der Eigenschaften, wie beispielsweise zum Verringern der Diffusion des Arbeitsgases, sind möglich. Auch Werkstoffverbunde und/oder Verbundwerkstoffe können genutzt werden.

Da im Energiebereitstellungszyklus ein konstanter Arbeitsgasdruck gefordert ist, muss der Speichergasdruck höher sein, als der Arbeitsgasdruck. Anders als bei anderen Systemen können diese beiden Größen hier jedoch relativ entkoppelt werden, so dass ein konstanter Arbeitsgasdruck möglich ist. Wie bereits beschrieben hat die Gestaltung des Druckspeichers und des Verdichtungsbehälters großen Einfluss auf den Speichergasdruck. Nicht genutztes Volumen des Raumes in dem Verdichtungsbehälter verringert den maximalen Druck und damit auch den maximalen Speichergasdruck. Es ist jedoch ein sicheres Restvolumen zu wählen, das verhindert, dass der Verdichtungsbehälter vollständig mit Verdichtungsflüssigkeit gefüllt wird. Die Füllhöhe im Verdichtungsbehälter ist aber auch abhängig vom Speichergasdruck. So kann beispielsweise Arbeitsgas unter Druck in den Verdichtungsbehälter geleitet werden um ein vollständiges Ausfüllen der Kammer zu verhindern, womit das System auch bei unerwartet großen Schwankungen der Füllhöhe des Gewässers betrieben werden kann. Weiterhin hängt der Speichergasdruck vom ersten Einweg-Ventil ab. Insbesondere bei einer schnelleren Durchströmung des Arbeitsgases durch das erste Einweg-Ventil hat die Auslegung des Einweg-Ventils einen großen Einfluss auf den Speichergasdruck. Das bedeutet, dass der Speichergasdruck vom Druckspeicher, vom ersten Einweg-Ventil und vom Verdichtungsbehälter abhängt. Diese Komponenten können vorteilhafter Weise aufeinander abgestimmt sein.

Es handelt sich also um ein System, bei dem die Energie aus einem umliegenden Gewässer genutzt wird um einen Druck zu erzeugen, der gespeichert werden kann und anschließend zum Simulieren eines Speicherkraftwerks verwendet wird, wobei unter Simulieren eines Speicherkraftwerks zu verstehen ist, dass das Arbeitsgas so auf die Arbeitsflüssigkeit wirkt, dass die Arbeitsflüssigkeit bei der Turbineneinheit agiert, als käme sie aus einem Speicherkraftwerk mit entsprechender Fallhöhe und somit auch konstantem Druck. Das System stellt also eine regenerative Energiespeicherung und Rückgewinnung bereit, wobei die Energie der Verdichtungsflüssigkeit de facto kostenlos zur Verfügung steht. Das System arbeitet umwelt- und ressourcenschonend und kann im Wesentlichen geräuschlos betrieben werden.

Weitere, besonders vorteilhafte Ausgestaltungen und Weiterbildungen der Erfindung ergeben sich aus den abhängigen Ansprüchen sowie der nachfolgenden Beschreibung.

Bei dem System weist die Arbeitsgas-Bereitstellungseinheit ausgangsseitig einen Druckregler auf, der zum Erzeugen des im Wesentlichen konstanten Arbeitsgasdrucks des bereitgestellten Arbeitsgases während der Beförderung der Arbeitsflüssigkeit durch die Turbineneinheit ausgebildet ist. Die Druckregelung kann über ein oder mehrere Druckregler geschehen. Einfache selbstregelnde Druckminderer können diese Aufgabe übernehmen. Bevorzugt handelt es sich jedoch um steuerbare Druckreglungssysteme. So ein Druckregelungssystem kann beispielsweise ein oder mehrere stufenlos steuerbare Ventile aufweisen. Auch kann ein solche Druckregelungssystem mehrere Drosseln, insbesondere mit unterschiedlichen aber unveränderbaren Querschnitten, aufweisen, die durch vorgeschaltete Ventile gezielt angesteuert werden können. Auch eine Kombination von stufenlos steuerbaren Ventilen und unterschiedlicher Drosseln konstanten Querschnitts in verschiedenen seriellen und/oder parallelen Anordnungen ist möglich. Ein Druckregelungssystem kann des Weiteren verschiedene Sensoren aufweisen, die beispielsweise Druck, Durchfluss oder Temperatur messen. Ein solches Druckregelungssystem kann beispielsweise auch verschiedene Aktoren aufweisen, die das Ventil oder die Ventile steuern. Zum Steuern bzw. Regeln des im Wesentlichen konstanten Arbeitsgasdruckes, der durch den Druckregler eingestellt wird, kann eine Steuereinheit eingesetzt werden. Diese Steuereinheit kann beispielsweise eine Druckregelungs-Steuereinheit sein, die als primäre Aufgabe das Steuern oder Regeln des Druckes hat. Die Aufgabe kann aber auch von einer Arbeitsgas-Bereitstellungseinheit-Steuereinheit oder von einer zentralen Steuereinheit übernommen werden. Das Druckregelungssystem kann daneben noch weitere Komponenten aufweisen, wie beispielsweise Sicherheitsventile, Vorwärmer, Wärmetauscher, Entfeuchter usw. Auch können hier bekannte Systeme zum Bereitstellen eines konstanten Drucks adaptiert werden, wie z.B. Gas-Druckregelanlagen (GDRA) bzw. Gas-Druckregel- und Messanlagen (GDRMA) die für die Erdgasförderung bekannt sind.

Bei dem System, das zum Beispiel an Meeresküsten vorkommt, weißt der Verdichtungsbehälter gemäß einem weiteren Aspekts eine bis unter den Meeresspiegel reichende Öffnung auf, sodass Meerwasser als die Verdichtungsflüssigkeit bedingt durch die natürliche Wellenbewegung oder den Tidenhub einströmen und wieder herausströmen kann. Ein großer Vorteil dieses Systems gegenüber vergleichbaren Systemen, die Meerwasser für die Energiebereitstellung verwenden ist, dass die Arbeitsflüssigkeit hier beliebig gewählt werden kann, wobei sich insbesondere Süßwasser anbietet. Dadurch sind die sensiblen und insbesondere die beweglichen Komponenten, insbesondere in der Turbineneinheit aber auch die Ventile usw. des Systems nicht im direkten Kontakt mit dem Salzwasser, das für die meisten Werkstoffe sowohl chemisch als auch mechanisch schädlicher ist als Süßwasser. Dies erlaubt es diese Komponenten verstärkt auf andere Anforderungen zu optimieren. So kann bzw. können beispielsweise die Turbine bzw. die Turbinen der Turbineneinheit verstärkt auf Stabilität und mit einer geringen Masse ausgelegt werden, weil korrosive Eigenschaften eine untergeordnete Rolle spielen, gegenüber vergleichbaren Systemen, bei denen die Arbeitsflüssigkeit und die Verdichtungsflüssigkeit gleich sind. Dadurch steigt auch die Effizienz des Systems. Durch die Verwendung von Meerwasser als Verdichtungsflüssigkeit kann, wie im weiteren noch detaillierter beschrieben wird, sowohl die Energie aus Wellen als auch aus dem Tidenhub genutzt werden. Die Öffnung, die es dem Meerwasser als Verdichtungsflüssigkeit ermöglicht, in den Verdichtungsbehälter ein und wieder auszuströmen, kann auf unterschiedliche Weise ausgebildet sein. So kann beispielsweise der Verdichtungsbehälter ins Wasser ragen und auf der Unterseite die Öffnung aufweisen, also die Öffnung durch das Fehlen eines Bodens des Behälters realisiert sein. Die Öffnung kann aber auch als Durchgang in der Wand oder an einem existierenden Boden des Verdichtungsbehälters realisiert sein. Es ist auch möglich, dass die Öffnung aus mehreren Durchgängen durch den Verdichtungsbehälter besteht. Die Öffnung kann auch Gitter, Stangen oder ähnliches aufweisen, die unerwünschte Objekte, wie Treibgut oder Fische, davon abhalten in den Verdichtungsbehälter zu gelangen. Das System kann selbstverständlich auch für andere stehende Gewässer, die ausreichend Wellen oder sonstige häufige, z.B. wetterbedingte, Füllhöheänderungen aufweisen in äquivalenter Form umgesetzt werden, auch wenn es sich nicht um Meerwasser im eigentlichen Sinn handelt. Die Druckänderung kann wie bei Wellenkraftwerken das Ergebnis von Wellen und Wellentälern sein. Hierbei entstehen verhältnismäßig unregelmäßige Druckunterschiede. Die Druckänderung kann auch die Folge des Tidenhubs sein. Der Tidenhub führt zu periodischen langandauernden Druckunterschieden. Auch eine Kombination aus beiden ist möglich. So kann bei diesem System, anders als bei vielen reinen Wellenkraftwerken, sowohl die Energie aus Tidenhub als auch aus Wellen gewonnen werden, weil beides zu einem Druckunterschied im Verdichtungsbehälter führt und dieser Druck im Druckspeicher gespeichert werden kann. Üblicherweise liefern die Wellen bei diesem System den weitaus größeren Anteil bei der Energieumsetzung, als der Tidenhub. Anders als bei bekannten Wellenkraftwerken ist der Tidenhub jedoch kein störendes Phänomen, das die Rahmenbedingungen unangenehm beeinflusst. Vielmehr stellt der Tidenhub bei dem hier präsentierten System einen positiven Umstand dar, der genutzt werden kann, um daraus Energie zu generieren, oder die Systemeigenschaften positiv zu beeinflussen. Der Tidenhub macht beispielsweise bei Hamburg ca. 3,5 m aus. Wellenkraftwerke müssen so ausgelegt werden, dass sie diese Veränderung kompensieren können, was bei bekannten Systemen Probleme bereitet hat. Das hier präsentierte System profitiert jedoch davon, dass der Druck zufolge der Wellen um eine langsam relativ harmonisch schwingende Druckänderung zufolge des Tidenhubs schwankt, weil so sowohl niedrige als auch hohe Drücke erzeugt werden, die es erlauben die Druckspeicher optimal zu befüllen. Weiterhin erlaubt das System die Menge an Arbeitsgas im Verdichtungsbehälter zu kontrollieren, womit eingestellt werden kann, dass der Füllstand nur um einen gewissen Bereich schwankt.

Dem Verdichtungsbehälter kann auch ein Wasserabscheider nachgeschaltet sein, der verhindert, dass Verdichtungsflüssigkeit in Systemkomponenten gerät, in denen diese unerwünscht ist. So ein Wasserabscheider kann grundsätzlich bei allen Ausbildungsformen vorgesehen werden, ist aber insbesondere bei der Verwendung von Meerwasser als Verdichtungsflüssigkeit sinnvoll, weil hier besonders dynamische Druckänderungen und damit einhergehendes Spritzwasser und/oder Gischt zu erwarten ist. Der Wasserabscheider kann zwischen Druckbehälter und Druckspeicher liegen und diese Verbindung mit verschiedensten Rohren oder sonstigen räumlichen Verbindungen und verschiedensten Ventilen realisieren. Insbesondere ein Durchflussventil, dass zwischen Verdichtungsbehälter und Wasserabscheider liegt und im geöffneten Zustand die Druckübertragung vom Verdichtungsbehälter in den Wasserabscheider ermöglicht, kann vorteilhaft sein, aber auch eine Verbindung der beiden Komponenten mittels eines Rohrs ist möglich. Das Durchflussventil kann so schaltbar ausgebildet sein, dass es im Normalbetrieb durchgehend geöffnet ist und der Druck im Verdichtungsbehälter und im Wasserabscheider ungefähr gleich sind. Das Durchflussventil kann aber auch wie das erste Einweg-Ventil ausgebildet sein, sodass bei Wellentälern im Wasserabscheider ein Druck herrscht der niedriger ist, als jener im Verdichtungsbehälter und, sodass sich der Druck vom Verdichtungsbehälter im Wasserabscheider fortsetzt, wenn der Druck im Verdichtungsbehälter höher ist als der ursprüngliche Druck im Wasserabscheider, also so, dass der Wasserabscheider wie der Druckspeicher agiert. Bei der Verwendung eines Wasserabscheiders wandert das erste Einweg-Ventil konstruktiv zwischen Wasserabscheider und Druckspeicher, sodass Arbeitsgas aus dem Wasserabscheider in den Druckspeicher strömen kann, wenn der Druck im Wasserabscheider höher ist als der Druck im Druckspeicher. Weiterhin weißt der Wasserabscheider ein Abscheideventil auf, das geöffnet werden kann, um die Verdichtungsflüssigkeit aus dem Wasserabscheider abzuleiten. Dies kann beispielsweise geschehen, wenn eine bestimmte Füllhöhe erreicht ist oder wenn eine gewisse Zeit vergangen ist. Zum Messen der Füllhöhe können verschiedene Sensoren vorhanden sein. Die Ableitung der Verdichtungsflüssigkeit aus dem Wasserabscheider kann in die Umgebung, also aus dem System heraus, oder in den Druckspeicher münden. In äquivalenter Form können Wasserabscheider auch an anderen Stellen im System, wie beispielsweise nach dem Druckspeicher vorgesehen sein.

Bei dem System weißt der Verdichtungsbehälter gemäß einem weiteren Aspekts ein Zu-und Ablauf-Leitungssystem auf, sodass Fließwasser aus einem, insbesondere alpinen, Wasserspeicher oder einem fließenden Gewässer, insbesondere einem Fluss und dergleichen, als die Verdichtungsflüssigkeit, insbesondere bedingt durch die natürliche Fließbewegung, einströmen und wieder herausströmen kann. Das Zu- und Ablauf-Leitungssystem kann ähnlich der Öffnung bei dem System für Meerwasser durch eine Öffnung im Verdichtungsbehälter realisiert sein. So kann das System auf ein fließendes Gewässer, das z.B. durch regelmäßiges Stauen und Ablassen von Wasser eine schwankende Füllhöhe hat, aufgesetzt werden. Das System verhält sich dann wie das für Meerwasser ausgelegte System bei Tidenhub und die äquivalenten Ausbildungen für die Öffnung bzw. das Zu- und Ablauf-Leitungssystem sind möglich. Bei fließenden Gewässern lässt sich das Zu- und Ablauf-Leitungssystem jedoch auch optimierter auslegen, sodass durch einen Zulauf Fließwasser als die Verdichtungsflüssigkeit in den Verdichtungsbehälter geleitet wird, sodass dieses im Verdichtungsbehälter ansteigt und das Arbeitsgas verdichtet, das gespeichert und für die Energiebereitstellung genutzt werden kann. Hat die Verdichtungsflüssigkeit eine gewünschte Füllhöhe im Verdichtungsbehälter erreicht, wird der Zulauf mittels Ventil unterbrochen und der Ablauf wird freigegeben. Durch den Ablauf kann die Verdichtungsflüssigkeit abfließen. Zugleich wird der Verdichtungsbehälter wieder mit Arbeitsgas gefüllt. Zum Befüllen stehen verschiedene Möglichkeiten zur Verfügung, die im weiteren noch genauer erörtert werden. Nachdem die Verdichtungsflüssigkeit abgelaufen ist, kann der Verdichtungsbehälter erneut mit Verdichtungsflüssigkeit aus dem Fließwasser befüllt werden und der Verdichtungsprozess beginnt von vorne. Der Zulauf und der Ablauf können auf gleicher oder auf unterschiedlicher Höhe platziert sein. Sie können auch eine variable Höhe aufweisen, oder aus mehreren Teilzuläufen oder Teilabläufen bestehen. So kann das Zu- und Ablauf-Leitungssystem aus mehreren Zuläufen bestehen, die auf unterschiedlichen Höhen platziert sind, wobei jeweils durch jene Zuläufe die Verdichtungsflüssigkeit geleitet wird, durch die die geringsten Verluste zu erwarten sind. Das gleiche gilt für die Abläufe. Es können auch sämtliche bekannten oder zukünftigen Methoden zur Minimierung von Strömungsverlusten beim Ein- und Ausleiten von Flüssigkeiten in einen Behälter verwendet werden. Durch die Stauung des Fließwasser kann es je nach Gegebenheit zu mehr oder weniger relevanten Füllhöhenänderungen vor dem Verdichtungsbehälter, also in der Umgebung, kommen. Es kann daher sinnvoll sein, um diese Füllhöhenänderung auszugleichen, bzw. kontrolliert ablaufen zu lassen, einen Staubereich, Hydrophore oder hydraulische Akkumulatoren vorzuschalten, also zulaufseitig an den Verdichtungsbehälter anzubringen. Ob dies notwendig ist, hängt jedoch von den landschaftlichen Gegebenheiten ab. Das System bietet sich insbesondere für alpine, also in hügeligen Regionen gelegene, Wasserspeicher an. Das System kann anstelle klassischer Speicherkraftwerke verwendet werden. Es kann aber auch für fließende Gewässer genutzt werden, die, beispielsweise zum Schutz der umliegenden Gebiete, nicht so stark gestaut werden sollen wie es für klassische Speicherkraftwerke notwendig ist. Dies ist einerseits deshalb möglich, weil geringere Stauvolumen zur Energieumwandlung notwendig sind und andererseits, weil Energie im Druckspeicher gespeichert werden kann. Bei herkömmlichen Speicherkraftwerken wird je nach verwendeter Turbine entweder eine entsprechende Fallhöhe oder ein entsprechendes Schluckvolumen benötigt. Unterhalb der Mindestanforderungen lassen sich die Turbinen nicht effizient betreiben. Bei dem hier präsentierten System hingegen reichen verhältnismäßig geringe Füllvolumen um den Druck zu erzeugen und zu speichern. Später kann der Druck genutzt werden um eine Turbine unter verhältnismäßig optimalen Bedingungen zu betreiben. Die Druckspeicher haben aber auch den Vorteil, dass sie sowohl oberirdisch als auch unterirdisch realisiert werden können. Somit kann man sie dort platzieren, wo sie am wenigsten stören oder schaden. Bei herkömmlichen Speicherkraftwerken hingegen ist durch die Landschaft vorgegeben, welche Bereiche geflutet werden müssen. Änderungen sind hier nur sehr bedingt möglich und sehr teuer.

Gemäß einem weiteren Aspekt weist die Arbeitsgas-Bereitstellungseinheit ein zweites Einweg-Ventil auf, das zum Einströmen der Umgebungsluft als Arbeitsgas in den Verdichtungsbehälter bei Vorliegen von dies ermöglichenden Druckverhältnissen dient, insbesondere dann, wenn bedingt durch ein Herausströme der Verdichtungsflüssigkeit aus dem Verdichtungsbehälter ein Unterdruck im Verhältnis zum Umgebungsluftdruck herrscht. So kann sichergestellt werden, dass immer genügend Luft als Arbeitsgas im System zur Verfügung steht. So können die Druckspeicher auch wesentlich größer ausgelegt werden, als für einen einmaligen Durchlauf des Energiebereitstellungszyklus notwendig ist. Das bedeutet, dass der Druckspeicher für ein wesentlich größeres Volumen ausgelegt werden kann als notwendig ist, um die Arbeitsflüssigkeit aus einem Flüssigkeitsbehälter durch die Turbineneinheit zu befördern. Daraus ergibt sich, dass das System ideal zur längerfristigen Energiespeicherung geeignet ist. Damit geht auch der Vorteil einher, dass die Energie aus überlagernden Änderungen des Füllstands des umliegenden Gewässers wie beispielsweise Energie aus Wellen und Energie aus dem Tidenhub umgesetzt werden kann. Betrachtet man das System beispielsweise bei einsetzender Ebbe, wird der Druck im Verdichtungsbehälter zufolge von Wellen schwanken. Durch die fortlaufende Ebbe würde der Druck im Verdichtungsbehälter jedoch mit der Zeit sinken. Durch das zweite Einweg-Ventil wird der Druck jedoch immer dann, wenn er etwas unter den Umgebungsdruck fällt, wieder auf diesen gesetzt, bzw. wird solange Umgebungsluft in den Verdichtungsbehälter gelassen bis im Verdichtungsbehälter Umgebungsdruck herrscht. Wird der Druck durch eine Welle wieder erhöht, kann dieser Druckunterschied wie zuvor erörtert gespeichert werden. Setzt nun die Flut ein, wird die Luft, die sich jetzt zusätzlich im System befindet komprimiert und kann gespeichert und umgesetzt werden. Dies gilt natürlich in äquivalenter Form auch für anders entstehende kleiner schwankende Druck- bzw. Füllstandsänderungen. So kann dies auch beispielsweise bei Staukraftwerken auftreten, bei denen Füllstandschwankungen zu beobachten sind. Das zweite Einweg-Ventil kann wie das erste Einweg-Ventil auf unterschiedliche Weise realisiert werden. Die für das erste Einweg-Ventil vorgestellten Variationen können auch für das zweite Einweg-Ventil verwendet werden. Es können auch zwei unterschiedliche Ausbildungsformen für die beiden Einweg-Ventile Anwendung finden. Wie auch das erste Einweg-Ventil kann auch das zweite Einweg-Ventil als mehrere Ventile oder Ventilsysteme realisiert sein.

Es hat sich als besonders vorteilhaft erwiesen, wenn bei dem System der Druckspeicher eine Anzahl von parallel geschalteter Arbeitsgasspeichereinheiten aufweist und eine Arbeitsgasverteilereinheit vorgesehen ist, die zum selektiven Befüllen von jeweils nur einer einzigen der Arbeitsgasspeichereinheiten mit komprimierter Umgebungsluft als Arbeitsgas und zum selektiven Bereitstellen des Arbeitsgases aus jeweils nur einer einzigen Arbeitsgasspeichereinheit ausgebildet ist.

Wird ein Druckspeicher mit einer Anzahl von parallel geschalteten Arbeitsgasspeichereinheiten und einer Arbeitsgasverteilereinheit verwendet, kann der Druck in den einzelnen Arbeitsgasspeichereinheiten unterschiedlich sein. So kann z.B. bei leichtem Wellengang für eine Arbeitsgasspeichereinheit die zu Beginn einen sehr geringen Druck aufweist, der Druck etwas erhöht werden, also diese mit Arbeitsgas befüllt werden, das zufolge des beispielsweise leichten Wellengangs einen Druck aufweist, der etwas höher ist als jener in der Arbeitsgasspeichereinheit. Weißt die Arbeitsgasspeichereinheiten einen Druck auf, der in etwa den derzeitigen Maximaldruck im Verdichtungsbehälter entspricht oder einen gewissen Schwellwerk überschreitet, kann mittels der Arbeitsgasverteilereinheit umgeschaltet werden, dass die nächste Arbeitsgasspeichereinheiten befüllt wird. So können die Arbeitsgasspeichereinheiten der Reihe nach mit einem gewissen Druck befüllt werden, der unter dem üblichen Speichergasdruck liegen kann. Entstehen beispielsweise bei Flut anschließend hohe Drücke, können die bereits mit unter einem gewissen Druck stehenden Arbeitsgasspeichereinheiten weiter mit Arbeitsgas gefüllt werden. Währenddessen können weitere Arbeitsgasspeichereinheiten, die bereits mit dem gewünschten Speichergasdruck gefüllt sind, bereit stehen oder Arbeitsgas für die Energiebereitstellung abgeben. Wieder andere Arbeitsgasspeichereinheiten können zeitgleich leer bereitstehen um im Falle eines Energieüberangebots befüllt zu werden. Die Arbeitsgasverteilereinheit kann verschiedene Ventile und Rohre aufweisen. Anstatt Rohren können aber auch anders geformte Räume zum Einsatz kommen, die in äquivalenter Weise das unerwünschte Ausdringen des Arbeitsgas weitestgehend verhindern. Des Weiteren kann die Arbeitsgasverteilereinheit eine Steuereinheit aufweisen, die wie auch die anderen Steuereinheiten selbständig arbeiten kann oder als Sub-Einheit einer zentralen Steuereinheit ausgebildet sein kann, oder es kann auch die Arbeitsgasverteilereinheit von einer zentralen Steuereinheit angesteuert werden. Die Ventile können auch, insbesondere zum Teil selbstregelnd sein. Die Arbeitsgasverteilereinheit ist bevorzugt so ausgelegt, dass sie das Arbeitsgas in jene Arbeitsgasspeichereinheit leitet, die den optimalsten Druck aufweist, wobei der optimalste Druck jener ist, der am nächsten unter dem Druck des Arbeitsgases, das dazu geleitet werden soll, abzüglich eines Sicherheitsfaktors liegt. Der Sicherheitsfaktor ist zumindest so zu wählen, dass verhindert wird, dass Arbeitsgas aus dem Druckspeicher in den Verdichtungsbehälter fließt. Bevorzugt ist der Sicherheitsfaktor so groß, dass der Großteil des bewegten Arbeitsgases gespeichert werden kann.

Das System kann eingangs bereits angesprochen nur einen einzigen Flüssigkeitsbehälter zur Lagerung der Arbeitsflüssigkeit aufweisen. Dieser Flüssigkeitsbehälter wird während eines Energiebereitstellungszyklus entleert und muss danach auf möglichst effiziente Weise wieder mit Arbeitsflüssigkeit befüllt werden. Dies ist insbesondere dann möglich, wenn das System bei einem fließenden Gewässer oder in hügeligen oder alpinen Gelände zum Einsatz kommt, in dem die Arbeitsflüssigkeit von selbst wieder (über Rohr und Ventilsysteme) in den Flüssigkeitsbehälter einströmen kann. In diesem Fall wird die Arbeitsflüssigkeit durch das Fließwasser realisiert. Wird das System andererseits in Küstennähe oder an Küsten zum Einsatz gebracht, kann es auch so positioniert oder konfiguriert werden, dass das Meerwasser von selber (über ein Rohr- und/oder Ventilsystem) nach einem Energiebereitstellungszyklus in den Flüssigkeitsbehälter einströmen kann. Dies kann beispielsweise so geschehen, dass die Oberkante unter dem Meeresniveau angeordnet wird.

Kommen bei dem System jedoch zwei Flüssigkeitsbehälter zum Einsatz kann das System so konfiguriert bzw. ausgebildet sein, dass die in dem einen Flüssigkeitsbehälter befindliche Arbeitsflüssigkeit bei dem Energiebereitstellungszyklus in den zweiten Flüssigkeitsbehälter befördert wird, und in dem nächsten Energiebereitstellungszyklus wieder zurück in den ersten Flüssigkeitsbehälter befördert wird.

Die Turbineneinheit verbindet mindestens zwei Flüssigkeitsbehälter miteinander, mit dem Ziel, die Bewegungsenergie der Arbeitsflüssigkeit in elektrische Energie umzuwandeln. Dass die Turbineneinheit zwei Flüssigkeitsbehälter miteinander verbindet bedeutet hierbei, dass die Turbineneinheit der Arbeitsflüssigkeit in einem der beiden Flüssigkeitsbehälter zu einer gewünschten Zeit ermöglicht, durch die Turbineneinheit in den anderen Flüssigkeitsbehälter zu gelangen. Zum Erreichen des Ziels der Energieumwandlung weist die Turbineneinheit mindestens eine Turbine und mindestens einen Generator auf.

Um möglichst geringe Strömungsverluste zu verursachen, kann es von Vorteil sein, wenn für jeden Flüssigkeitstransport von einem Flüssigkeitsbehälter in einen anderen Flüssigkeitsbehälter eine eigene Turbine verwendet wird.

Für einen Fall, bei dem nur zwei Flüssigkeitsbehälter vorgesehen sind, bedeutet dies, dass zwischen den beiden Flüssigkeitsbehältern für jede Flussrichtung eine Turbine vorgesehen ist. Das kann insbesondere bei großen Anlagen, die lange betrieben werden, wirtschaftliche Vorteile mit sich bringen, weil die Strömungsverluste bedingt durch eine einfachere, zum Beispiel auch kürzere, Leitungsführung verringert sind.

Das System kann aber auch mit nur einer Turbine oder einer beliebigen Anzahl an Turbinen in der Turbineneinheit realisiert sein. Hierfür kann die Turbineneinheit neben der mindestens einen Turbine und dem mindestens einen Generator ein Flüssigkeitsleitsystem aufweisen, das die Arbeitsflüssigkeit aus einem Flüssigkeitsbehälter der gerade mit Arbeitsgas befüllt (also dessen Arbeitsflüssigkeit herausgedrückt) wird, durch die mindestens eine Turbine in den anderen Flüssigkeitsbehälter leitet, der mit der Arbeitsflüssigkeit befüllt wird. Das Flüssigkeitsleitsystem muss im nächsten Energiebereitstellungszyklus die Fließrichtung der Arbeitsflüssigkeit ändern. Bei einer Variante mit zwei Flüssigkeitsbehältern also beispielsweise die Arbeitsflüssigkeit so führen, dass diese jetzt aus dem neu befüllten Flüssigkeitsbehälter durch die mindestens eine Turbine zurück in den zuvor gefüllten und nun leeren Flüssigkeitsbehälter geführt wird.

Für eine Ausbildungsform, die ein Flüssigkeitsleitsystem aufweist, um die Arbeitsflüssigkeit aus unterschiedlichen Flüssigkeitsbehältern zu mindestens einer gleichen Turbine zu leiten, können beispielsweise Ventile benutzt werden. Diese Ventile können selbstregelnde Ventile sein. Diese Ventile können beispielsweise aufgrund des Druckunterschieds dann öffnen, wenn der Druck im mit Arbeitsflüssigkeit gefüllten Flüssigkeitsbehälter auf der Seite der Arbeitsflüssigkeit dem Arbeitsgasdruck und der Druck im zu befüllenden Flüssigkeitsbehälter dem Umgebungsdruck entspricht. Die Arbeitsflüssigkeit kann dann für einen Energiebereitstellungszyklus von dem einen Flüssigkeitsbehälter durch die mindestens eine Turbine in den korrespondierenden anderen Flüssigkeitsbehälter fliesen. Durch die im nächsten Energiebereitstellungszyklus geänderte Arbeitsgasbereitstellung durch die Arbeitsgas-Bereitstellungseinheit öffnen in diesem Energiebereitstellungszyklus die entsprechenden anderen Ventile, sodass die Arbeitsflüssigkeit wieder, jetzt aus dem anderen Flüssigkeitsbehälter kommend, durch die Turbineneinheit hindurchgeleitet werden kann. Die Komponenten des Systems in dieser Ausführungsform sind besonders kostensparend. Bevorzugt sind die Ventile jedoch steuerbare Ventile. Diese haben den Vorteil, dass sie nicht zwingend Energie aus dem System benötigen, um zu öffnen oder zu schließen und dass die Schaltung (also das Ein- und Ausschalten der Ventile oder in anderen Worten das Öffnen und Schließen der Ventile) optimiert ablaufen kann. So kann die Anlauf- und Auslaufzeit sowie die Schaltzeit minimiert werden.

Die Turbineneinheit kann eine Turbinensteuereinheit aufweisen, die für die Schaltung der Ventile zuständig ist. Die Turbinensteuereinheit kann beispielsweise auch so ausgebildet sein, dass sie mit einer Arbeitsgas-Bereitstellungseinheit-Steuereinheit, die die Arbeitsgas-Bereitstellungseinheit regelt, kommuniziert, und die beiden Steuereinheiten können ihre Entscheidungen aufeinander anpassen. Es ist auch möglich, dass eine zentrale Steuereinheit, die Turbinensteuereinheit und die Arbeitsgas-Bereitstellungseinheit-Steuereinheit koordiniert oder dass sie (unter anderem) die Aufgaben beider übernimmt. Es kann also eine Steuereinheit vorgesehen sein, die auch aus zwei oder drei oder mehr Sub-Einheiten bestehen kann. Weiterhin kann auch eine Steuereinheit für das erwähnte erste Einweg-Ventil vorhanden sein. Diese Steuereinheit kann ebenfalls als selbstständige Steuereinheit ausgelegt sein, oder ebenfalls eine Sub-Einheit einer zentralen Steuereinheit sein.

Erfindungsgemäß weist das System mehr als zwei Flüssigkeitsbehälter auf, wobei das System derart konfiguriert ist, dass die Arbeitsflüssigkeit der Reihe nach durch alle Flüssigkeitsbehälter hindurch immer nur zwischen zwei Flüssigkeitsbehältern von dem einen Flüssigkeitsbehälter zum nächsten Flüssigkeitsbehälter beförderbar ist.

Dadurch, dass immer zwei Flüssigkeitsbehälter an der Energiebereitstellung beteiligt sind, kann das Arbeitsgas aus einem dritten Flüssigkeitsbehälters, der nach dem Energiebereitstellungszyklus, in dem er involviert war, unter Restdruck steht, in Ruhe und auf Effizienz bedacht wie im weiteren noch genauer beschrieben anderswertig genutzt werden, während sich zwei andere Flüssigkeitsbehälter für die Energiebereitstellung genutzt werden. Eine Unterbrechung, wie es bei anderen Konfigurationen des Systems der Fall wäre, wird nicht benötigt. So kann mit Ausnahme der kurzen An- und Auslaufphasen, die verhältnismäßig kurz sind, kontinuierlich Strom generiert werden.

Um diese Phasen auch noch zu überwinden, können neben den zuvor genannten Set aus drei Flüssigkeitsbehältern, ein weiteres Set aus drei Flüssigkeitsbehältern Phasenverschoben arbeiten, sodass immer ein Set in der kontinuierlichen Energiebereitstellungsphase ist, wenn sich das andere Set in der kurzen An- und/oder Auslaufphase befindet.

Auch ein System aus zwei Sets mit je zwei Flüssigkeitsbehältern ist möglich, wenn die kontinuierliche Energiebereitstellungsphase und die An- und Auslaufphasen entsprechend geschickt gestaltet sind.

Des Weiteren können die Sets auch aus mehreren Flüssigkeitsbehältern bestehen, die hintereinander geschalten sind, oder es können auch mehrere Sets nebeneinander in verschiedenen Phasen laufen.

All diese Konfigurationen gehen mit dem Vorteil einher, dass das Wasser, welches durch den Druck des Arbeitsgases befördert wird, direkt auf die Turbine einwirkt. Somit ergibt sich ein wesentlich verbesserter Wirkungsgrad im Vergleich zu Systemen, bei denen das Arbeitsgas direkt auf eine Turbine wirkt.

Gemäß einem weiteren Aspekt der Erfindung weist jeder Flüssigkeitsbehälter ein Entlüftungsventil auf, das beim Befüllen des Flüssigkeitsbehälters mit Arbeitsflüssigkeit in seinem geöffneten Zustand zum Entlüften des Flüssigkeitsbehälter dient und das in seinem geschlossenen Zustand ein Entweichen des durch die Arbeitsgas-Bereitstellungseinheit eingebrachten Arbeitsgases verhindert.

Das Entlüftungsventil kann zum Zweck des Entlüftens derart dimensioniert bzw. ausgelegt oder steuerbar konfiguriert sein, dass sich im Inneren des zu entlüftenden Flüssigkeitsbehälters ein erwünschter bzw. definierter Gegendruck aufbaut. Bevorzugt ist das Entlüftungsventil jedoch derart dimensioniert bzw. ausgelegt oder steuerbar konfiguriert, dass während der Befüllung des Flüssigkeitsbehälters in dem Flüssigkeitsbehälter ein im Wesentlichen konstanter Druck herrscht, der in etwa dem Umgebungsdruck entspricht. Das Entlüftungsventil stellt also sicher, dass das Gas ausreichend schnell entweichen kann, ohne dass sich ein signifikanter Gegendruck aufbaut.

Im geschlossenen Zustand des Entlüftungsventils kann das mit Hilfe der Arbeitsgas-Bereitstellungseinheit eingebrachte Gas nicht entweichen und drückt daher mit konstantem Arbeitsgasdruck von oben her auf die Oberfläche der Arbeitsflüssigkeit in dem Flüssigkeitsbehälter.

Ist nun im Betrieb das Entlüftungsventil des ersten Flüssigkeitsbehälters, in dem das Arbeitsgas mit seinem Arbeitsgasdruck auf die Arbeitsflüssigkeit drücken soll, geschlossen und das Entlüftungsventil des zweiten Flüssigkeitsbehälters, in den die Arbeitsflüssigkeit von dem ersten Flüssigkeitsbehälter überführt werden soll, geöffnet, herrscht zwischen den Flüssigkeitsbehältern eine im wesentlichen konstante Druckdifferenz, die mit Hilfe der Arbeitsgas-Bereitstellungseinheit aufrecht erhalten wird, während die Arbeitsflüssigkeit von dem ersten Flüssigkeitsbehälter durch die Turbineneinheit in den zweiten Flüssigkeitsbehälter fließt.

Dies führt zu einem konstanten Durchfluss, also zu einem konstanten Massenstrom der Arbeitsflüssigkeit durch die Turbineneinheit und damit zu einem konstanten Leistungs-Output, insbesondere mit konstanter Drehzahl der Turbine und folglich auch konstanter Frequenz des damit erzeugten elektrischen Strom. Dies erleichtert die Energieeinspeisung ins Stromnetz und verursacht weniger Verluste, als wenn die Leistung und Frequenz im großen Stil mittels mechanischer, hydrodynamischer (hier wird die konstante Drehzahl bei den Turbinen über die Düsen, insbesondere die Düsennadeln(-stellung) (Menge / Druck), geregelt) oder elektronischer Maßnahmen auf das Soll geregelt werden müsste. Selbstverständlich können solche Methoden, insbesondere die Düsennadeln(-stellung), auch hier angewendet werden, um den Betrieb der Turbineneinheit und die Stromeinspeisung zu optimieren. Durch die direkte Einflussnahme auf die Düsennadeln (z.B. Ihre Stellungen) kann die Drehzahl der Turbine sehr genau justiert, insbesondere auch relativ rasch justiert, und konstant gehalten werden. Allerdings können diese Maßnahmen auf einen konstanten Betrieb optimiert eingestellt werden, und müssen nicht im Laufe eines Energiebereitstellungszyklus dynamisch über einen weiten Betriebsbereich angepasst werden.

Wie bereits angedeutet, bleibt nach der Energiebereitstellung, wenn keine Entlüftungsventile verwendet werden oder wenn nur ein Teil entlüftet wird, ein Restdruck in dem jeweiligen Flüssigkeitsbehälter, der weiter genutzt werden kann. Es hat sich daher als besonders vorteilhaft erwiesen, wenn das System eine Rückführung aufweist, die zum Rückführen des in dem zumindest einen Flüssigkeitsbehälter enthaltenen Arbeitsgases ausgebildet ist. Für diese Rückführung können verschiedene Rohre, Leitungen, Räume oder ähnliches und verschiedenste Ventile verwendet werden. Die Rückführung kann ohne zusätzliche Steuerung realisiert sein oder mit einer selbständigen Steuerung, die zufolge der mechanischen und strömungsmechanischen Gegebenheiten schaltet. Bevorzugt wird die Rückführung jedoch mittels einer Steuereinheit, die eine selbständige Steuereinheit, oder eine zentrale Steuereinheit oder ein Teil einer zentralen Steuereinheit ist, in Kombination mit entsprechenden Sensoren und Aktoren realisiert. Die Rückführung kann aber auch wenn sie mit einer Steuereinheit realisiert ist, so ausgebildet sein, dass sie stromlos schaltbar ist, sodass z.B. bei einem Stromausfall der Steuereinheit eine Rückführung des Arbeitsgases möglich ist.

Die Rückführung kann zu verschiedenen Systemkomponenten erfolgen, wobei es auch möglich ist, dass ein System so schaltbar ausgelegt ist, dass eine Rückführung zu verschiedenen Systemkomponenten in einem System möglich ist.

Es hat sich als besonders Vorteilhaft erwiesen, wenn das System derart ausgebildet ist, dass die Rückführung in den Verdichtungsbehälter mündet. So können im Verdichtungsbehälter höhere Drücke erzeugt werden, was bei der Befüllung des Druckspeichers von Vorteil ist. Insbesondere wenn dieser eine Anzahl von parallel geschalteter Arbeitsgasspeichereinheiten aufweist, können so bereits teilweise gefüllte Arbeitsgasspeichereinheiten weiter befüllt werden. Aber auch bei anderen Druckspeichern kann so mehr Energie in Form von unter Druck stehenden Arbeitsgas gespeichert werden. Der Wirkungsgrad des Systems kann somit durch diese Maßnahme gesteigert werden. Ein weiterer Vorteil ist, dass so auch die Füllhöhe der Verdichtungsflüssigkeit im Verdichtungsbehälter verändert werden kann. Es ist also besonders von Vorteil, wenn die Rückführung in den Verdichtungsbehälter so erfolgt, dass die Verdichtungsflüssigkeit im Verdichtungsbehälter einen kritischen Wert nicht überschreitet oder unterschreitet. So kann beispielsweise verhindert wird, dass Verdichtungsflüssigkeit aus dem Verdichtungsbehälter in andere Systemkomponenten gedrückt wird. Bei einer Verwendung von Meerwasser als Verdichtungsflüssigkeit kann die Rückführung auch dafür genutzt werden, den Unterschied zwischen Ebbe und Flut auszugleichen oder die geänderten Gegebenheiten anzupassen. So könnte, je nach Anforderungen, beispielsweise bei Ebbe mehr Arbeitsgas rückgeführt werden, um ähnliche Druckbedingungen wie bei Flut zu schaffen. Es könnte aber auch sein, dass bei Flut mehr zurück geführt wird, um ein Überschwappen der Verdichtungsflüssigkeit zu verhindern. So kann der Verdichtungsbehälter für Schwankungen um eine bestimmte Füllhöhe optimiert werden und so auch platzsparender ausgelegt werden. Bei Flut kann so beispielsweise die mittlere Füllstandhöhe der Verdichtungsflüssigkeit im Verdichtungsbehälter ähnlich wie jene bei Ebbe gehalten werden. Der Druck schwankt dann um einen höheren Wert, wie bei einer vorgespannten Feder. Das kann, wie erwähnt, sehr vorteilhaft sein, weil so über den Tag verteilt verschiedenhohe Drücke erzeugt werden, was eine optimale Befüllung der Druckbehälter ermöglicht. Ob und wie viel zurück geführt wird kann auch in Abhängigkeit vom Druckspeicher geregelt sein, sodass der Druck darauf ausgelegt wird, dass der Druckspeicher optimal befüllt werden kann. Die nötigen strukturellen Maßnahmen bestehe im Wesentlichen daraus, dass ein Arbeitsgas-Rückleitungssystem vorgesehen ist, das die Flüssigkeitsbehälter mit der Arbeitsgas-Bereitstellungseinheit verbindet. Diese Maßnahme ermöglicht die Rückführung und Nutzung des Arbeitsgas, das sich am Ende eines Energiebereitstellungszyklus in dem betreffenden (im Wesentlichen entleerten) Flüssigkeitsbehälter befindet, von dem betreffenden Flüssigkeitsbehälter in die Arbeitsgas-Bereitstellungseinheit. Dabei wird der Druck des Arbeitsgases vom zunächst vorliegenden Arbeitsgasdruck sukzessive reduziert, bis ein End-Druck vorliegt, der minimal dem Umgebungsdruck entspricht.

Es hat sich als besonders Vorteilhaft erwiesen, wenn das System derart ausgebildet ist, dass die Rückführung in den Druckspeicher mündet. Wenn im Druckspeicher bereits ein niedrigerer Druck herrscht als der Druck des zurückgeführten Arbeitsgases, kann dieses einfach gespeichert werden. Beim weiteren Befüllen des Druckspeichers muss dann weniger Luft verdichtet werden, und mehr Energie kann genutzt werden. Bei der Verwendung von Arbeitsgasspeichereinheiten ist die Rückführung in den Druckspeicher besonders vorteilhaft, weil sehr wahrscheinlich Arbeitsgasspeichereinheiten vorliegen, die einen ausreichend niedrigen Druck aufweisen und befüllt werden können.

Durch das Rückführen des Arbeitsgases, in den Druckspeicher bzw. insbesondere zuvor in den Verdichtungsbehälter, mit einem höheren Druck als dem Umgebungsdruck muss dieses zum Speichern in einem Druckspeicher (bzw. dessen Arbeitsgasspeichereinheiten), der unter einem bestimmten Speichergasdruck steht, der höher als der Arbeitsgasdruck ist, weniger stark verdichtet werden, als ein Gas das vom Umgebungsdruck auf den Speichergasdruck verdichtet wird. So kann Energie beim Verdichten gespart werden.

Durch das Rückführen des Arbeitsgases verbleibt auch immer der Großteil des Gases im System. Anders als bei anderen Systemen, bei denen zum Druckausgleich ein Entlüftungsventil eines Flüssigkeitsbehälters, in dem ein Gasdruck herrscht, der höher als der Umgebungsdruck ist, wird hier ein großer Teil des Arbeitsgases wieder zurückgeführt und nicht in die Umgebung abgegeben. Zusätze, die die Eigenschaften des Gases beeinflussen, können so wirtschaftlicher genutzt werden. Auch können Einrichtungen wie ein (stärkerer) Filter, der das Gas (bzw. die Umgebungsluft), das von der Arbeitsgas-Bereitstellungseinheit bei der Energiespeicherung aufgenommen wird, filtert sinnvoll sein. Bei herkömmlichen Systemen ist jedoch bekannt, dass Filter den Wirkungsgrad verringern. Weil bei dem erfindungsgemäßen System ein Großteil des Arbeitsgases, das der Arbeitsgas-Bereitstellungseinheit zur Verdichtung zugeführt wird, aus dem System selber kommt oder in anderen Worten im System zirkuliert und daher nicht gefiltert werden muss, kann es sinnvoll sein, den Teil der neu in das System eingebracht wird, also beispielsweise durch das zweite Einweg-Ventil einströmende Umgebungsluft, zu filtern. Dies führt zu einem System, das in Summe einen guten Wirkungsgrad aufweist und dabei zuverlässiger läuft als herkömmliche Systeme. Die nötigen strukturellen Maßnahmen bestehe im Wesentlichen aus den gleichen Komponenten wie bei der Rückführung zum Verdichtungsbehälter.

Es ist also besonders vorteilhaft, wenn beide Arten der Rückführung möglich sind, und das System so abgestimmt ist, dass im Verdichtungsbehälter, über eine gewisse Zeit betrachtet, ein durchschnittlicher Druck herrscht, der so hoch ist, dass die Schwankungen um diesen Durchschnittswert zufolge der Druckänderungen des umgebenden Gewässers, sodass die daraus resultierende Energie, bzw. der Druck optimal im Druckspeicher gespeichert werden kann. Das bedeutet, dass die Rückführung so realisiert ist, dass die hierfür benötigten Druckverhältnisse optimal sind. Es ist daher auch von Vorteil, wenn Arbeitsgas aus dem Druckspeicher in den Flüssigkeitsbehälter zurückgeführt werden kann.

Gemäß einem weiteren Aspekt der Erfindung weist das System zumindest zwei Flüssigkeitsbehälter auf, die im Wesentlichen auf gleichem Niveau positioniert sind. Da die zumindest beiden Flüssigkeitsbehälter auf im Wesentlichen gleichem, bevorzugt identem, Niveau positioniert sind, ist bei der Flüssigkeitsbeförderung auch im Wesentlichen keine Hubarbeit gegen die Schwerkraft zu leisten. Befinden sich die Flüssigkeitsbehälter nicht auf identischem Niveau, z.B. mit einem Niveauunterscheid von ca. 10 Meter, weil eine Hanglage dies erforderlich macht, so kann dies durch den Absolut-Wert des konstanten Drucks des Arbeitsgases beim jeweiligen Energiebereitstellungszyklus berücksichtigt werden. Es ist also, anders als beispielsweise bei konventionellen Speicherkraftwerken, keine topographische Höhendifferenz nötig. So kann das System platzsparend und auch in im Wesentlichen Ebenen Landschaften umgesetzt werden.

Gemäß einem weiteren Aspekt der Erfindung ist das System so ausgebildet, dass der Druckspeicher zumindest teilweise, insbesondere im Wesentlichen vollständig, als Pipeline ausgebildet ist. So kann der Druckspeicher gleichzeitig zur Überwindung von örtlichen Distanzen zwischen Druckerzeugung und Energiebereitstellung verwendet werden. Dadurch kann die bedarfsabhängige Energieumsetzung auch örtlich, zumindest in einem gewissen Rahmen, von der Energiequelle, also dem Gewässer entfernt realisiert werden. So kann beispielsweise bei fließendem Gewässer auf einem Berg, die Energie mit einem geringen Stauvolumen umgewandelt werden und in Form von Druck in Pipelines gespeichert werden. Im Tal, wo die Errichtung eines Systems zur Energiebereitstellung einfacher ist, und die Energie nachgefragt wird, können dann die entsprechenden Komponenten des Systems stehen. So muss die Landschaft am Berg beispielsweise weniger beeinflusst werden als bei einem vergleichbaren Speicherkraftwerk. Auch bei der Umsetzung mit Meerwasser als Verdichtungsflüssigkeit kann die Verwendung von Pipelines als Druckspeicher interessant sein, weil so nur ein kleinerer Teil direkt beim Meer erbaut werden muss, wo die Grundstückspreise meist höher und die baulichen Rahmenbedingungen oft unvorteilhaft sind. Der große Teil des Systems kann so beispielsweise am Rande einer Stadt erbaut werden, ohne viel Platz beim Meer zu benötigen. Die Druckspeicher können auch als Pipeline mehrere Arbeitsgasspeichereinheiten aufweisen. Diese können beispielsweise so realisiert sein, dass mehrere Pipelines parallel verlaufen und mittels Arbeitsgasverteilereinheit so geschaltet werden, dass jeweils eine Pipeline eine Arbeitsgasspeichereinheit bildet. Es ist aber auch möglich, dass der Teil des Druckspeichers, der eine Pipeline bildet gemeinsam mit einem Teil der als klassischer Druckspeicher ausgeführt ist, den Druckspeicher bildet. Der Teil des Druckspeichers, der nicht als Pipeline ausgebildet ist kann ebenfalls Arbeitsgasspeichereinheiten aufweisen. Es ist also auch möglich dass beide Teile Arbeitsgasspeichereinheiten aufweisen. Dies ermöglicht es, sehr fein abgestimmt Arbeitsgas mit verschiedenen Drücken zu speichern.

Weiterhin hat es sich als besonders vorteilhaft erwiesen, dass bei dem System keine offenen Flüssigkeitsbehälter vorgesehen sein müssen, wie z.B. ein nach oben hin offenes Flüssigkeits-Becken, um die Arbeitsflüssigkeit bereitzustellen. Die zumindest zwei Flüssigkeitsbehälter sind bevorzugt hinsichtlich der enthaltenen Arbeitsflüssigkeit, abgeschlossene Behälter, zwischen denen die Arbeitsflüssigkeit durch die Turbineneinheit hindurch überströmen kann. Lediglich Verdunstungsverluste der Arbeitsflüssigkeit können durch Zufuhr von Arbeitsflüssigkeit von außerhalb der Flüssigkeitsbehälter her kompensiert werden. Damit geht der Vorteil einher, dass die in den Flüssigkeitsbehältern enthaltene Arbeitsflüssigkeit über die Betriebszeit des Systems betrachtet im Wesentlichen sauber bleibt und so gut wie keine Maßnahmen zur Reinigung und/oder Filtration vorgesehen werden müssen. Die geschlossene Ausbildung erlaubt es auch die Flüssigkeitsbehälter unterirdisch, also in der Landschaft versenkt, oder sogar in einem See oder dem Meer versenkt zu positionieren. Dies erlaubt die Energiespeicherung von überschüssiger elektrischer Energie mit Hilfe der Arbeitsgas-Bereitstellungseinheit de facto unmittelbar am Ort der Entstehung bzw. in der unmittelbaren Nähe. Die Energie kann also direkt vor Ort, bzw. in der Nähe gespeichert werden. Die Flüssigkeitsspeicher können auf vorteilhaft Weise gleich Vorort in die Landschaft integriert werden, wie z.B. dort unterirdisch versenkt werden und dementsprechend mit kurzen Rohren miteinander verbunden werden.

Es sei angemerkt, dass vorteilhafte Ausführungsformen einer Komponente natürlich in äquivalenter Weise für andere Komponenten Anwendung finden können. So können beispielsweise die Ausführungen für die beschriebenen Ventile auch für andere Ventile im System verwendet werden und die Materialien der Flüssigkeitsbehälter, des Druckspeichers usw. können auch bei anderen Komponenten verwendet werden.

Abschließend sei der Vollständigkeit wegen noch darauf hingewiesen, dass alle Behälter wie auch Leitungen, also sowohl die flüssigkeitsführenden also auch die gasführenden Komponenten des Systems, inklusive ihrer Verbindungen und Ventile usw. auf den im System bzw. im jeweiligen Teilsystem herrschenden oder maximal zu erwartenden Druck mit ausreichend Sicherheit dimensioniert sein müssen. Dies stellt sicher, dass das System nicht nur innerhalb seines Betriebsbereiches sondern auch mit ausreichend Reserve druckbeständig ist.

Insbesondere bei dem Einsatz an Küsten, wo die Wellenraft ungehindert zur Verfügung steht, liefert das System in den stürmischen Jahreszeiten einen erheblichen Beitrag zur regenerativen Energiebereitstellung. Das System arbeitet selbst unter extremen Witterungsbedingungen zuverlässig, da die drucklufterzeugenden Komponenten gegen Stürme unempfindlich sind. Die beweglichen und sensiblen Komponenten bei der Energiebereitstellung sind durch den Druckspeicher getrennt und dadurch gegen Witterungseinflüsse geschützt.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
Fig. 1 ein System zur Energiespeicherung und Energierückgewinnung mit drei Flüssigkeitsbehältern;
Fig. 2 - 4 das System gemäß der Figur 1 in jeweils einer Momentaufnahme zu Beginn eines Energiebereitstellungszyklus;
Fig. 5 eine Arbeitsgas-Bereitstellungseinheit des Systems für die Verwendung in mariner Umgebung;
Fig. 6 eine Arbeitsgas-Bereitstellungseinheit des Systems für fließende Gewässer mit einem Druckspeicher der eine Anzahl von Arbeitsgasspeichereinheiten aufweist

### Beschreibung der Ausführungsbeispiele

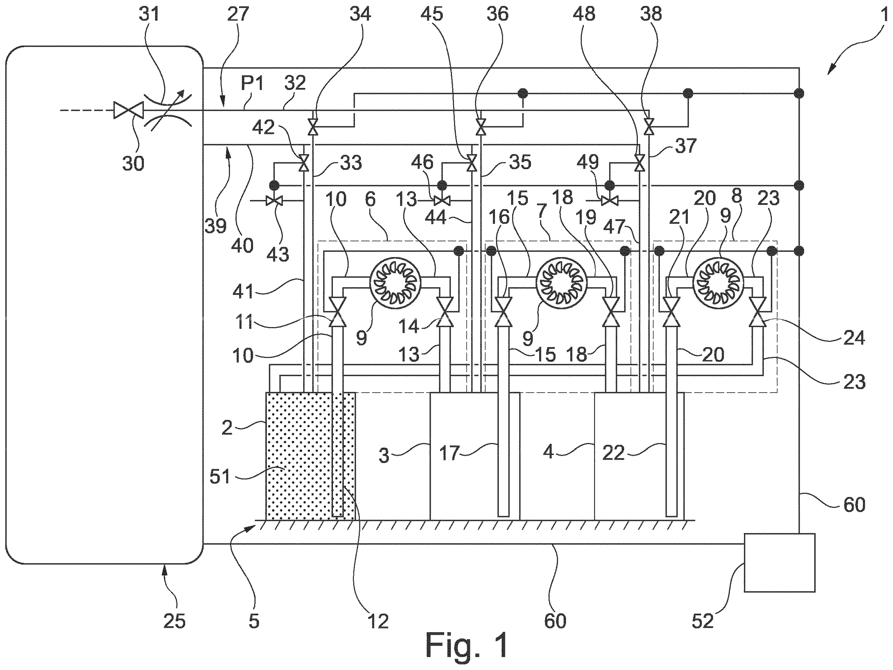

In der Figur 1 ist eine System 1 zur Energiespeicherung und Energierückgewinnung, nachfolgend kurz System 1 genannt, dargestellt. Das System 1 weist einen erste, zweiten und dritten Flüssigkeitsbehälter 2, 3, und 4 auf, wobei die Flüssigkeitsbehälter 2, 3, 4 identisches Volumen aufweisen und alle Flüssigkeitsbehälter 2 - 4 auf einer ebenen Bodenplatte 5 stehen, sodass sie sich auf gleichem Niveau befinden. Die Flüssigkeitsbehälter 2-4 sind aus Beton/Stahlbeton gefertigt und so aufgebaut, dass diese mit ausreichender Sicherheit den im System 1 herrschenden Drücken standhalten, was im Übrigen auch für alle anderen Komponenten des Systems 1 zutrifft.

Der Flüssigkeitsbehälter 2 ist mit Süßwasser als Arbeitsflüssigkeit 51 gefüllt.

Das System 1 weist weiterhin eine erste, zweite und dritte Turbineneinheit 6, 7 und 8 auf, wobei die Turbineneinheiten mit Peltonturbinen 9 zur Stromerzeugung ausgerüstet sind, die wie an der Figur 1 dargestellt oberhalb der Flüssigkeitsbehälter 2 - 4 installiert sind. Die Peltonturbinen 9 sind jeweils an einen Generator (nicht dargestellt) angeschlossen, sodass diese Einheit aus Turbine und Generator Bewegungsenergie in elektrische Energie umwandeln kann.

Die erste Turbineneinheit 6 verbindet den ersten Flüssigkeitsbehälter 2 mit dem zweiten Flüssigkeitsbehälter 3 derart, dass die Arbeitsflüssigkeit 51 von dem ersten Flüssigkeitsbehälter 2 durch die Peltonturbine 9 in den zweiten Flüssigkeitsbehälter 3 fließen kann und dabei die Peltonturbine 9 antreibt. Im Detail weist die erste Turbineneinheit 6 zulaufseitig eine erste Turbinen-Zulaufverrohrung 10 mit einem ersten Turbinen-Zulaufventil 11 und mit einer ersten Steigleitung 12 auf, die bis nahe an den Boden des ersten Flüssigkeitsbehälter 2 oder seine pumpensumpfähnliche Vertiefung reicht und dort den Flüssigkeitsaustritt aus dem ersten Flüssigkeitsbehälter 2 ermöglicht. Ablaufseitig weist die erste Turbineneinheit 6 eine erste Ablaufverrohrung 13 mit einem ersten Ablaufventil 14 auf, wobei die erste Ablaufverrohrung 13 oben an den zweiten Flüssigkeitsbehälter 3 angekoppelt ist und dort den Flüssigkeitseintritt in diesen ermöglicht.

Die zweite Turbineneinheit 7 verbindet den zweiten Flüssigkeitsbehälter 3 mit dem dritten Flüssigkeitsbehälter 4 derart, dass die Arbeitsflüssigkeit 51von dem zweiten Flüssigkeitsbehälter 3 durch die Peltonturbine 9 in den dritten Flüssigkeitsbehälter 4 fließen kann und dabei die Peltonturbine 9 antreibt. Im Detail weist die zweite Turbineneinheit 7 zulaufseitig eine zweite Turbinen-Zulaufverrohrung 15 mit einem zweiten Turbinen-Zulaufventil 16 und mit einer zweiten Steigleitung 17 auf, die bis nahe an den Boden des zweiten Flüssigkeitsbehälter 3 oder seine pumpensumpfähnliche Vertiefung reicht und dort den Flüssigkeitsaustritt aus dem zweiten Flüssigkeitsbehälter 3 ermöglicht. Ablaufseitig weist die zweite Turbineneinheit 7 eine zweite Ablaufverrohrung 18 mit einem zweiten Ablaufventil 19 auf, wobei die zweite Ablaufverrohrung 18 oben an den dritten Flüssigkeitsbehälter 4 angekoppelt ist und dort den Flüssigkeitseintritt in diesen ermöglicht.

Die dritte Turbineneinheit 8 verbindet den dritten Flüssigkeitsbehälter 4 mit dem ersten Flüssigkeitsbehälter 2 derart, dass die Arbeitsflüssigkeit 51von dem dritten Flüssigkeitsbehälter 4 durch die Peltonturbine 9 in den ersten Flüssigkeitsbehälter 2 fließen kann und dabei die Peltonturbine 9 antreibt. Im Detail weist die dritte Turbineneinheit 8 zulaufseitig eine dritte Turbinen-Zulaufverrohrung 20 mit einem dritten Turbinen-Zulaufventil 21 und mit einer dritten Steigleitung 22 auf, die bis nahe an den Boden des dritten Flüssigkeitsbehälter 4 oder seine pumpensumpfähnliche Vertiefung reicht und dort den Flüssigkeitsaustritt aus dem dritten Flüssigkeitsbehälter 4 ermöglicht. Ablaufseitig weist die dritte Turbineneinheit 8 eine dritte Ablaufverrohrung 23 mit einem ersten Ablaufventil 24 auf, wobei die dritte Ablaufverrohrung 24 oben an den ersten Flüssigkeitsbehälter 2 angekoppelt ist und dort den Flüssigkeitseintritt in diesen ermöglicht.

Das System 1 weist weiterhin eine Arbeitsgas-Bereitstellungseinheit 25 zur Bereitstellung eines Arbeitsgases 26 als Luft mit einem im Wesentlichen konstanten Arbeitsgasdruck P1 auf, wobei die Arbeitsgas-Bereitstellungseinheit 25 ein Arbeitsgas-Zuleitungssystem 27 aufweist, welches eine Zuleitung des Arbeitsgases 26 mit konstantem Arbeitsgasdruck P1 in die Flüssigkeitsbehälter 2 - 4 ermöglicht.

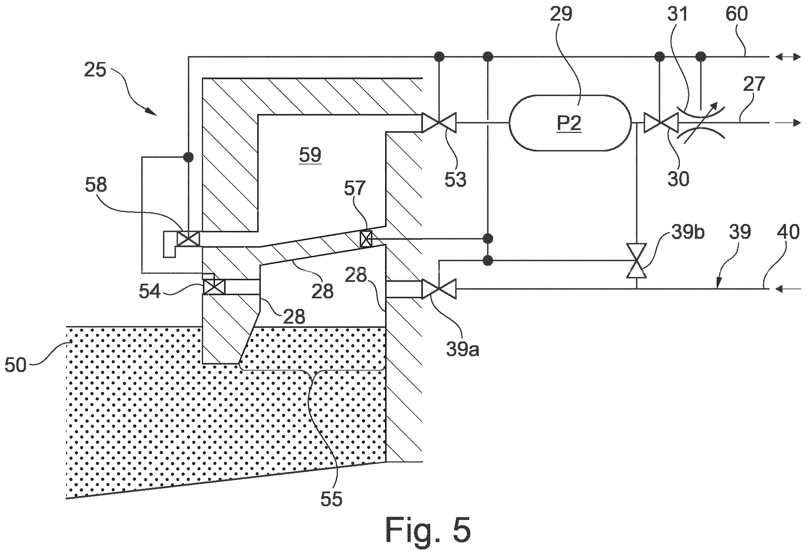

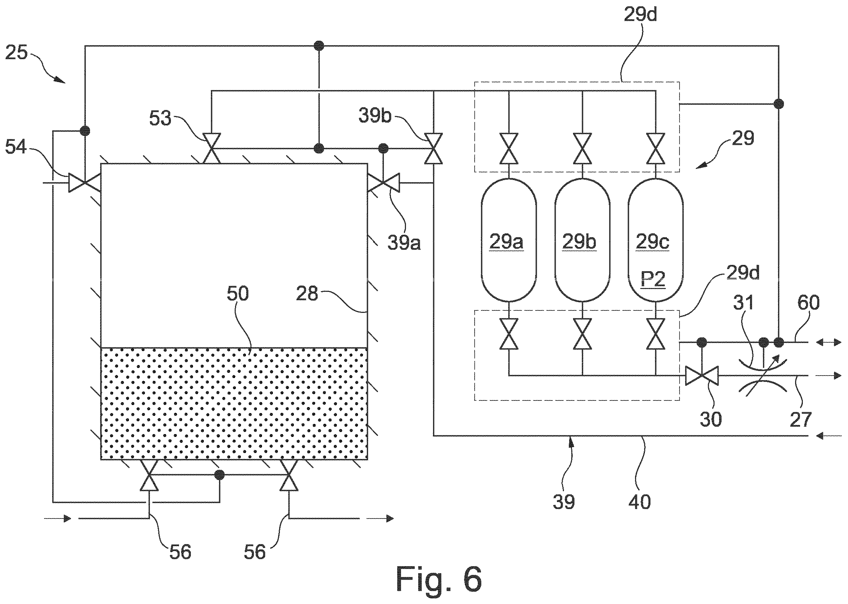

Zwei Ausführungsformen der Arbeitsgas-Bereitstellungseinheit 25 sind in den Figuren 5 und 6 dargestellt und entsprechend beschrieben. In beiden Fällen weist die Arbeitsgas-Bereitstellungseinheit 25 einen Verdichtungsbehälter 28 auf, in dem Arbeitsgas 26 durch eine, in den Verdichtungsbehälter 28 einströmende, Verdichtungsflüssigkeit 50 komprimiert bzw. verdichtet wird. In beiden Fällen weist die Arbeitsgas-Bereitstellungseinheit 25 einen Druckspeicher 29 auf, der mittels Verrohrung und einem ersten Einwegventil 53 an den Verdichtungsbehälter 28 angeschlossen ist. Das erste Einwegventil 53 lässt im Normalbetrieb komprimiertes Arbeitsgas 26 aus dem Verdichtungsbehälter 28 in den Druckspeicher 29 fließen. Der Druckspeicher 29 kann, wie in Figur 6 dargestellt mehrere Arbeitsgasspeichereinheiten 29a, 29b, 29c aufweisen. Im Druckspeicher 29 wird das Arbeitsgas mit einem Speicherdruck P2 gespeichert, wobei der Speicherdruck P2 den maximalen momentanen Speicherdruck beschreibt.

An den Druckspeicher 29 ist das Arbeitsgas-Zuleitungssystem 27 angeschlossen, das eingangsseitig eine Absperrventil 30 aufweist, das z.B. beim Hochfahren des Systems 1 zunächst geschlossen ist, bis sich der Speicherdruck P2 aufgebaut hat. Weiterhin weist das Arbeitsgas-Zuleitungssystem 27 einen Druckregler 31, mit dessen Hilfe der Speicherdruck P2 auf den Arbeitsgasdruck P1 herabgeregelt wird.

Das Arbeitsgas-Zuleitungssystem 27 weist eine zentralen Zuleitung 32 auf, die eingangsseitig an den Druckregler 31 ankoppelt.

Von der zentralen Zuleitung 32 zweigt ein erster Zuleitungsstrang 33 ab, der ein erstes Zuleitungsventil 34 aufweist, wobei der erste Zuleitungsstrang 33 deckenseitig in den ersten Flüssigkeitsbehälter 2 mündet, sodass dort das Arbeitsgas 26 zuführbar ist, wenn das erste Zuleitungsventil 34 geöffnet ist.

Von der zentralen Zuleitung 32 zweigt ein zweiter Zuleitungsstrang 35 ab, der ein zweites Zuleitungsventil 36 aufweist, wobei der zweite Zuleitungsstrang 35 deckenseitig in den zweiten Flüssigkeitsbehälter 3 mündet, sodass dort das Arbeitsgas 26 zuführbar ist, wenn das zweite Zuleitungsventil 36 geöffnet ist.

Von der zentralen Zuleitung 32 zweigt ein dritter Zuleitungsstrang 37 ab, der ein drittes Zuleitungsventil 38 aufweist, wobei der dritte Zuleitungsstrang 37 deckenseitig in den dritten Flüssigkeitsbehälter 4 mündet, sodass dort das Arbeitsgas 26 zuführbar ist, wenn das dritte Zuleitungsventil 38 geöffnet ist.

Die Arbeitsgas-Bereitstellungseinheit 25 weist weiterhin ein Arbeitsgas-Rückleitungssystem 39 auf, das es erlaubt, das sich in den Flüssigkeitsbehältern 2 - 4 befindliche und unter Druck stehende Arbeitsgas 26 zum Verdichtungsbehälter 28 und zum Druckspeicher 29 zurückzuführen und dort zu verwerten, also den Druck des Arbeitsgases 26 zu nützen, so dass nicht bei jedem Nachfüllen des Druckspeichers 29 die Umgebungsluft vom Druck der Umgebungsluft weg komprimiert werden muss.

Das Arbeitsgas-Rückleitungssystem 39 weist eine zentralen Rückleitung 40 auf, die ausgangsseitig in der Arbeitsgas-Bereitstellungseinheit 25 mündet und dort bedarfsabhängig in den Verdichtungsbehälter 28 und/oder in den Druckspeicher 29 weiter leitet.

Von der zentralen Rückleitung 40 zweigt ein erster Rückleitungsstrang 41 ab, der ein erstes Rückleitungsventil 42 aufweist, wobei der erste Rückleitungsstrang 41 deckenseitig in den ersten Flüssigkeitsbehälter 2 mündet, so dass von dort das Arbeitsgas 26 rückführbar ist, wenn das erste Rückleitungsventil 42 geöffnet ist. Zwischen dem ersten Rückleitungsventil 42 und der Einmündung des ersten Rückleitungsstrangs 41 in den ersten Flüssigkeitsbehälter 2 ist der erste Rückleitungsstrang 41 mit einem zur Umgebung hin offenen ersten Entlüftungsventil 43 gekoppelt, mit dem ein Entlüften des ersten Flüssigkeitsbehälters 2 hin zur Umgebung möglich ist, wenn das erste Entlüftungsventil 43 geöffnet ist.

Von der zentralen Rückleitung 40 zweigt ein zweiter Rückleitungsstrang 44 ab, der ein zweites Rückleitungsventil 45 aufweist, wobei der zweite Rückleitungsstrang 44 deckenseitig in den zweiten Flüssigkeitsbehälter 3 mündet, so dass von dort das Arbeitsgas 26 rückführbar ist, wenn das zweite Rückleitungsventil 45 geöffnet ist. Zwischen dem zweiten Rückleitungsventil 45 und der Einmündung des zweiten Rückleitungsstrangs 44 in den zweiten Flüssigkeitsbehälter 2 ist der zweite Rückleitungsstrang 44 mit einem zur Umgebung hin offenen zweiten Entlüftungsventil 46 gekoppelt, mit dem ein Entlüften des zweiten Flüssigkeitsbehälters 3 hin zur Umgebung möglich ist, wenn das zweite Entlüftungsventil 46 geöffnet ist.

Von der zentralen Rückleitung 40 zweigt ein dritter Rückleitungsstrang 47 ab, der ein drittes Rückleitungsventil 48 aufweist, wobei der dritte Rückleitungsstrang 47 deckenseitig in den dritten Flüssigkeitsbehälter 4 mündet, so dass von dort das Arbeitsgas 26 zurückführbar ist, wenn das dritte Rückleitungsventil 48 geöffnet ist. Zwischen dem dritten Rückleitungsventil 48 und der Einmündung des dritten Rückleitungsstrangs 47 in den zweiten Flüssigkeitsbehälter 2 ist der dritte Rückleitungsstrang 48 mit einem zur Umgebung hin offenen dritten Entlüftungsventil 49 gekoppelt, mit dem ein Entlüften des dritten Flüssigkeitsbehälters 4 hin zur Umgebung möglich ist, wenn das dritte Entlüftungsventil 49 geöffnet ist.

Das Arbeitsgas-Rückleitungssystem 39 mündet einerseits in einem Verdichtungsbehälter-Rückleitungsventil 39a und andererseits in einem Druckspeicher-Rückleitungsventil 39b. Beide Ventile sind in diesem Fall als aktive Ventile ausgeführt, die bedarfsabhängig angesteuert werden. Sie könnten in einer einfacheren Ausführungsform aber auch als passive Ventile ausgeführt sein. Durch das Verdichtungsbehälter-Rückleitungsventil 39a und das Druckspeicher-Rückleitungsventil 39b kann also das Arbeitsgas 26, wie beschrieben, in den Verdichtungsbehälter 28 und/oder in den Druckspeicher 29 rückgeführt werden.

Hinsichtlich der Flüssigkeitsbehälter 2 - 4 sei noch erwähnt, dass diese hermetisch abgeschlossen sind, selbstverständlich mit Ausnahme der Ankopplungen an die Arbeitsgas 26 bzw. Arbeitsflüssigkeit 51 führenden Leitungen.

Des Weiteren weist das System 1 eine Steuereinheit 52 auf, die dazu ausgebildet ist, sämtliche Ventile, 34, 36, 38, 42, 45, 48, 43, 46, 49, 11, 14, 16, 19, 21, 24, inklusive der Ventile 30, 53, 54 der Arbeitsgas-Bereitstellungseinheit 25 sowie des Druckspeichers 29 und eines eventuellen Zu- und Ablaufsystems 56 der Arbeitsgas-Bereitstellungseinheit 25 bzw. deren Aktoren, die die entsprechenden Ventile öffnen oder schließen, sowie den Druckregler 31, bzw. dessen Aktor zu steuern bzw. zu regeln. Die Steuereinheit 52 sendet zu diesem Zweck Steuer-Daten- bzw. -Signale über Steuerleitungen 60 an alle steuerbaren System-Komponenten. Sie kann auch von diesen wie auch von diversen Sensoren über die Steuerleitungen 60 Daten bzw. Signale empfangen. Als die Steuereinheit 52 kann z.B. ein zentraler Server mit entsprechender Programmierung vorgesehen sein, der seine steuernden Signale an die verschieden elektronisch ansteuerbar ausgebildeten Systemkomponenten (wie. z.B. die erwähnten Ventile usw.) abgibt. Auch können mehrere Sub-Steuereinheiten (nicht dargestellt) vorgesehen sein, die z.B. dezentral bei den jeweils zu steuernden Systemkomponenten positioniert sind, und die von einer übergeordneten Steuereinheit koordinierend angesteuert werden. Wird durch die Verdichtungsflüssigkeit 50 Energie bereitgestellt, kann das Arbeitsgas 26 verdichtet und im Druckspeicher 29 gespeichert werden. Insbesondere bei Verdichtung von Umgebungsluft als Arbeitsgas 26 können weitere Schritte wie Filtrierung und Entfeuchtung der Luft vorgeschaltet sein. Dazu kann zwischen dem ersten Einwegventil 53 und dem Druckspeicher 29 ein System zur Luftentfeuchtung und/oder Luftreinigung angebracht sein, das in den Figuren nicht dargestellt ist. Die Phasen zwischen Energieüberangebot und Energiebedarf sind schwankend und können unterschiedliche zeitliche Abstände haben. So ist der Energiebedarf tagsüber meist höher als nachts. Aber auch längere Zeitperioden sind möglich. So wird in vielen Gebieten im Sommer mehr Energie zum Betreiben von Klimageräten benötigt als im restlichen Jahr. Im Druckspeicher 29 kann das Arbeitsgas 26, anders als bei vielen anderen Energiespeicher-Methoden wie Wärmespeicher oder Bewegungsenergie-Speicher, auch über lange Zeiträume gespeichert werden. So kann das System auch relativ entkoppelt von der momentanen Nachfrage arbeiten und überschüssige Energie speichern und zu einem späteren Zeitpunkt bereitstellen.

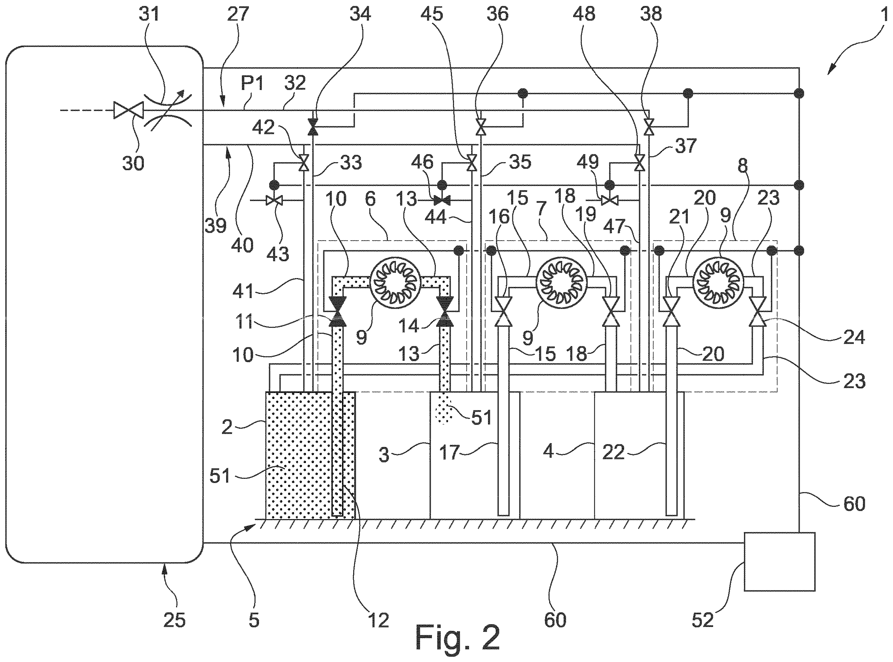

Die Figuren 2 bis 4 zeigen schemenhaft den Ablauf der Energierückgewinnung, wobei jede Figur 2, 3, 4 jeweils einen Energiebereitstellungszyklus darstellt. Hier ist zu Beginn, wie in Figur 2 dargestellt, der erste Flüssigkeitsbehälter 2 im Wesentlichen vollständig mit Arbeitsflüssigkeit 51, im vorliegenden Fall Wasser, gefüllt. Die beiden anderen Flüssigkeitsbehälter 3 und 4 sind im Wesentlichen vollständig entleert. Zudem ist der Druckspeicher 29 mit Arbeitsgas 26, im vorliegenden Fall Luft, gefüllt, die einen Speicherdruck P2 aufweist, der höher als der Arbeitsdruck P1 ist. In Figur 2 sind das Absperrventil 30, das erste Zuleitungsventil 34, das erste Turbinen-Zulaufventil 11, das erste Ablaufventil 14 sowie das zweiten Entlüftungsventil 46 geöffnet. Die restlichen Ventile sind geschlossen. Der Druckregler 31 hält den Arbeitsdruck P1 des Arbeitsgases 26 konstant. Das Arbeitsgas 26 drückt im ersten Flüssigkeitsbehälter 2 mit dem Arbeitsdruck P1 auf die Arbeitsflüssigkeit 51. Dadurch wird die Arbeitsflüssigkeit 51 durch die erste Turbinen-Zulaufverrohrung 10, durch das erste Turbinen-Zulaufventil 11, durch die Peltonturbine 9, durch die erste Ablaufverrohrung 13, durch das erste Ablaufventil 14, also durch die erste Turbineneinheit 6, in den zweiten Flüssigkeitsbehälter 3 gedrückt. Dadurch wird die Peltonturbine 9 sowie der dazugehörige Generator (nicht dargestellt) angetrieben. Der Generator, ggf. unter Zuhilfenahme einer Elektronik, speist die generierte Energie ins Stromnetz (nicht dargestellt) ein. Weil das zweite Entlüftungsventil 46 geöffnet ist, kann die in den zweiten Flüssigkeitsbehälter 3 einströmende Arbeitsflüssigkeit 51 die Luft durch das zweite Entlüftungsventil 46 aus dem zweiten Flüssigkeitsbehälter 3 verdrängen. Somit herrscht im zweiten Flüssigkeitsbehälter 3 ein im Wesentlichen konstanter Druck. Weil auch der Druck im ersten Flüssigkeitsbehälter 2 dem konstanten Arbeitsdruck P1 entspricht, stellt sich ein konstanter Druckunterschied zwischen den beiden Flüssigkeitsbehältern 2 und 3 ein. Dies bewirkt bei der Peltonturbine 9, dass sie (bis auf Ein- und Auslaufphase) mit konstanter Drehzahl betrieben wird.

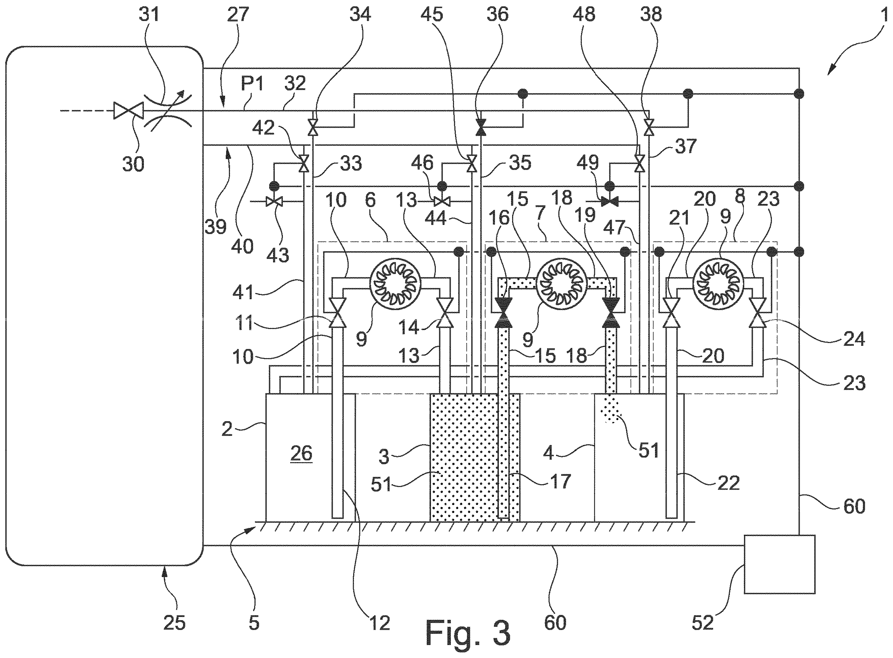

In Figur 3 sind das Absperrventil 30, das zweite Zuleitungsventil 36, das zweite Turbinen-Zulaufventil 16, das zweite Ablaufventil 19 sowie das dritte Entlüftungsventil 49 geöffnet. Die restlichen Ventile sind geschlossen. Das bedeutet, dass auch das zuvor geöffnete erste Zuleitungsventil 34, das erste Turbinen-Zulaufventil 11, das erste Ablaufventil 14 sowie das zweiten Entlüftungsventil 46 jetzt geschlossen ist. Der Druckregler 31 hält den Arbeitsdruck P1 des Arbeitsgases 26 konstant. Das Arbeitsgas 26 drückt im zweiten Flüssigkeitsbehälter 3 mit dem Arbeitsdruck P1 auf die Arbeitsflüssigkeit 51. Dadurch wird die Arbeitsflüssigkeit 51 durch die zweite Turbinen-Zulaufverrohrung 15, durch das zweite Turbinen-Zulaufventil 16, durch die Peltonturbine 9, durch die zweite Ablaufverrohrung 18, durch das zweite Ablaufventil 19, also durch die zweite Turbineneinheit 7, in den dritten Flüssigkeitsbehälter 4 gedrückt. Dadurch wird die Peltonturbine 9 sowie der dazugehörige Generator angetrieben. Der Generator speist die zurückgewonnene Energie ins Stromnetz ein. Weil das dritte Entlüftungsventil 49 geöffnet ist, herrscht in Analogie zu dem zuvor erwähnten Sachverhalt im dritten Flüssigkeitsbehälter 4 ein im Wesentlichen konstanter Druck. Weil auch der Druck im zweiten Flüssigkeitsbehälter 3 dem konstanten Arbeitsdruck P1 entspricht, stellt sich wieder ein im Wesentlichen konstanter Druckunterschied zwischen den beiden Flüssigkeitsbehältern 3 und 4 ein. Somit wird auch diese Peltonturbine 9 (bis auf Ein- und Auslaufphase) mit konstanter Drehzahl betrieben.

Im ersten Flüssigkeitsbehälter 2 befindet sich noch das Arbeitsgas 26 mit einem Druck, der in etwa dem Arbeitsdruck P1 entspricht. Die Steuereinheit 52 kann nun aufgrund von internen und externen Informationen entscheiden, ob es sinnvoller ist, wie im Folgenden beschrieben, einen Hochdruck- oder einen Niederdruckmodus zu fahren. Was als sinnvoller gilt, kann je nach Wunsch des Betreibers unterschiedlich sein. So kann die Regelung beispielsweise nach wirtschaftlichen oder nach ökologischen Gesichtspunkten erfolgen. Auch kann die Belastung für die einzelnen Systemkomponenten berücksichtigt werden, und eine Langlebigkeit dieser als sinnvolle Regelung angesehen werden. Auch ein Optimum dieser Zielgrößen oder ein Kompromiss der selbigen kann von der Regelung als sinnvoll erachtet und angestrebt werden.

Der Speicherdruck P2 ist im betriebsbereiten Zustand stets höher oder mindestens gleich dem Arbeitsdruck P1. Der Speicherdruck P2 kann geringfügig höher als der Arbeitsdruck P1 sein, um das Arbeitsgas mit möglichst wenig Energiebedarf zurückführen zu können. Dieser Niederdruckmodus ermöglicht es, mehrere Energiebereitstellungszyklen möglichst effizient zu durchlaufen. So kann der beispielsweise der Speicherdruck P2 20 Prozent höher sein als der Arbeitsdruck P1. Dies kann beispielsweise auch dann sinnvoll sein, wenn große aber weniger druckbeständige Druckspeicher 29, wie natürliche Untergrundspeicher, verwendet werden. In den meisten Fällen ist es jedoch wünschenswert, wenn möglichst viel Energie bei möglichst wenig Raumbedarf gespeichert werden kann.

Deswegen kann der Druckspeicher 29 auch als ein Hochdruckspeicher für hohe Speicherdrücke P2 ausgelegt sein. Wenn der Speicherdruck P2 relativ hoch ist, und der Arbeitsdruck P1 im Vergleich dazu wesentlich geringer ist, kann das System 1 in einem Hochdruckmodus so betrieben werden, dass das Arbeitsgas 26, das sich am Ende des Energiebereitstellungszyklus in jenem Druckbehälter 2 befindet, der wieder mit Arbeitsflüssigkeit 51 befüllt werden soll, nicht in die Arbeitsgas-Bereitstellungseinheit 25 zurückgeführt wird, sondern durch das Entlüftungsventil 43 ausgelassen wird. Die Wahl welcher Modus gefahren wird, kann auch von der Nachfrage abhängen. Weist der Druckspeicher beispielsweise mehrere Arbeitsgasspeichereinheiten 29a, 29b, 29c auf, ist eine Rückführung, also ein Niederdruckmodus sinnvoll, bis alle Arbeitsgasspeichereinheiten 29a, 29b, 29c gefüllt sind. Jetzt wäre eine weitere Speicherung der Energie der Verdichtungsflüssigkeit 50 nur noch mit zusätzlichen Einrichtungen möglich. Es ist also sinnvoll jetzt in einen Hochdruckmodus zu wechseln.

Die Vorteile dieser beiden Systeme bzw. Modi lassen sich also auch kombinieren. So kann bei einem Energieüberangebot das Arbeitsgas bis zu hohen Speicherdrücken gespeichert werden. Bei Energiebedarf kann dieses dann wie für hohe Drücke beschrieben, im Hochdruckmodus, solange genutzt werden, bis eine Rückführung des Arbeitsgases (beispielsweise energetisch) sinnvoller ist. Dann kann das System wie für geringe Druckunterschiede beschrieben, im Niederdruckmodus, betrieben werden. Die Ventile werden also solange der Speicherdruck P2 wesentlich höher als der Arbeitsdruck P1 ist, so geschaltet, dass das Arbeitsgas 26 am Ende des Energiebereitstellungszyklus durch die jeweiligen Entlüftungsventile 43, 46, 49 in die Umgebung geleitet wird. Also entweicht beispielsweise das Arbeitsgas 26 aus dem Flüssigkeitsbehälter 2, nachdem die Arbeitsflüssigkeit 51 aus diesem in den Flüssigkeitsbehälter 3 befördert wurde, durch das Entlüftungsventil 43. Sobald der Speicherdruck P2 einen gewissen Schwellwert unterschritten hat, sodass der Druckunterschied zwischen Speicherdruck P2 und Arbeitsdruck P1, so gering ist, dass eine Energierückführung sinnvoll ist, werden die Ventile so geschaltet, dass das Arbeitsgas 26 durch die jeweiligen Rückleitungsstränge 41, 44, 47 und die jeweiligen Rückleitungsventile 42, 45, 48 geleitet wird. Also wird beispielsweise das Arbeitsgas 26 aus dem Flüssigkeitsbehälter 2, nachdem die Arbeitsflüssigkeit 51 aus diesem in den Flüssigkeitsbehälter 3 befördert wurde, durch den Rückleitungsstrang 41 und durch das Rückleitungsventil 42 zurück in die Arbeitsgas-Bereitstellungseinheit 25 geleitet.

Diese Regelung wird durch die Steuereinheit 52 übernommen. Dazu ist das System 1 neben den nötigen Aktoren, um die diversen Ventile und den Druckregler 31 zu steuern auch mit den entsprechenden üblichen Sensoren (auf deren Darstellung verzichtet wurde, um die Figuren nicht weiter zu überladen) ausgestattet. Die Steuereinheit 52 ist dazu ausgebildet anhand der verschiedenen Informationen von den Sensoren, sowie von externen Faktoren wie Energiebedarf oder Energieüberschuss, zu entscheiden welcher Modus gerade am sinnvollsten ist, und die Aktoren entsprechend zu steuern.

Das bedeutet im Falle des in Figur 3 gezeigten Energiebereitstellungszyklus, bei dem die Arbeitsflüssigkeit 51 vom zweiten Flüssigkeitsbehälter 3 in den dritten Flüssigkeitsbehälter 4 befördert wird, dass im Falle eines Hockdruckmodus das Arbeitsgas 26 aus dem ersten Flüssigkeitsbehälter 2 durch das erste Entlüftungsventil 43 entweicht. Im Falle eines Niederdruckmodus wird das Arbeitsgas 26 durch den ersten Rückleitungsstrang 41 und durch das erste Rückleitungsventil 42, durch die zentrale Rückleitung 40 in die Arbeitsgas-Bereitstellungseinheit 25 geleitet. Hier wird das Arbeitsgas 26 je nach Bedarf und Druckverhältnisse in den Verdichtungsbehälter 28 und/oder in den Druckspeicher 29 geleitet.

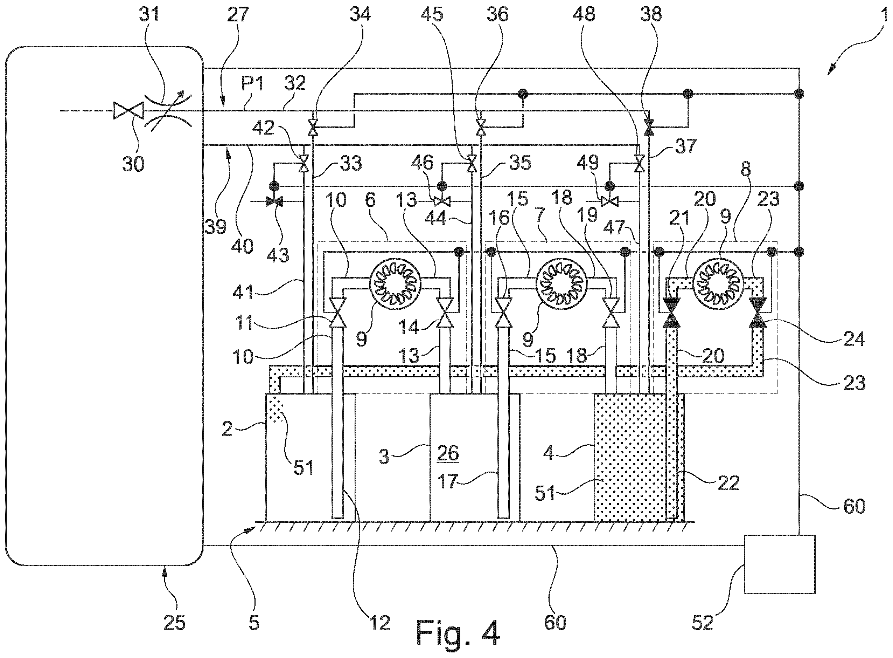

In Figur 4 sind das Absperrventil 30, das dritte Zuleitungsventil 38, das dritte Turbinen-Zulaufventil 21, das dritte Ablaufventil 24 sowie das erste Entlüftungsventil 43 geöffnet. Die restlichen Ventile sind geschlossen. Das bedeutet, dass auch das zuvor geöffnete zweite Zuleitungsventil 36, das zweite Turbinen-Zulaufventil 16, das zweite Ablaufventil 19 sowie das dritte Entlüftungsventil 49 jetzt geschlossen ist. Der Druckregler 31 hält den Arbeitsdruck P1 des Arbeitsgases 26 konstant. Das Arbeitsgas 26 drückt im dritten Flüssigkeitsbehälter 4 mit dem Arbeitsdruck P1 auf die Arbeitsflüssigkeit 51. Dadurch wird die Arbeitsflüssigkeit 51 durch die dritte Turbinen-Zulaufverrohrung 20, durch das dritte Turbinen-Zulaufventil 21, durch die Peltonturbine 9, durch die dritte Ablaufverrohrung 23, durch das dritte Ablaufventil 24, also durch die dritte Turbineneinheit 8, in den ersten Flüssigkeitsbehälter 2 gedrückt. Dadurch wird die Peltonturbine 9 sowie der dazugehörige Generator angetrieben. Der Generator speist die zurückgewonnene Energie ins Stromnetz ein. Weil das erste Entlüftungsventil 43 geöffnet ist, herrscht im ersten Flüssigkeitsbehälter 2 ein konstanter Druck. Weil auch der Druck im dritten Flüssigkeitsbehälter 4 dem konstanten Arbeitsdruck P1 entspricht, stellt sich ein konstanter Druckunterschied zwischen den beiden Flüssigkeitsbehältern 4 und 2 ein. Die Peltonturbine 9 wird also (bis auf Ein- und Auslaufphase) mit konstanter Drehzahl betrieben.

Abhängig vom Speicherdruck P2 in Relation zum Arbeitsdruck P1, sowie den weiteren internen und externen Informationen startet die Steuereinheit 52 nun für den mit Arbeitsgas 26 gefüllten zweiten Flüssigkeitsbehälter 3 einen Hochdruckmodus oder einen Niederdruckmodus. Im Falle eines Hockdruckmodus wird das Arbeitsgas 26 aus dem zweiten Flüssigkeitsbehälter 3 durch das zweite Entlüftungsventil 46 abgelassen. Im Falle eines Niederdruckmodus wird das Arbeitsgas 26 durch den zweiten Rückleitungsstrang 44 und durch das zweite Rückleitungsventil 45 und durch die zentrale Rückleitung 40 in die Arbeitsgas-Bereitstellungseinheit 25 geleitet. Hier wird das Arbeitsgas 26 je nach Bedarf und Druckverhältnisse in den Verdichtungsbehälter 28 und/oder in den Druckspeicher 29 geleitet.

Nun kann der Energiebereitstellungszyklus wie in Figur 2 dargestellt erneut beginnen. Die Energierückgewinnung über die Serie der Energiebereitstellungszyklen kann also nahtlos ablaufen, und zwar so dass auf die zwischenzeitliche Befüllung von zusätzlichen Behältern ohne eine Energierückgewinnung verzichte werden kann.

Beim Verdichten des Arbeitsgases 26 kann Wärme entstehen, jedoch wesentlich weniger, als dies bei konventionellen Verdichtern, wie z.B. Kompressoren usw. der Fall wäre. Um den Wirkungsgrad des Systems 1 zu verbessern, kann diese Wärme in Wärmespeichern gespeichert werden. Sie kann dann zu einem späteren Zeitpunkt, wenn ein Energiebedarf besteht, und das Arbeitsgas 26 durch den Druckregler 31 entspannt und dadurch abgekühlt wird, genutzt werden, um das sich entspannende Arbeitsgas 26 zu erwärmen.

Alternativ oder zusätzlich zudem, kann ein Wärmetauscher vorgesehen sein, der dazu ausgebildet ist, die Wärme, die beim Verdichten entsteht, abzuführen und zu nutzen, um Wasser zu verdampfen, das eine Dampfturbine antreibt. Diese Bewegungsenergie kann genutzt werden, um die Effizienz des Systems 1 zu erhöhen.

Die Steuereinheit 52 verfügt über einen eigenen Notenergiespeicher, um im Falle eines Stromausfalls sich und die Aktoren mit Energie zu versorgen. Des Weitern können die Ventile auch manuell bzw. mit entsprechendem Werkzeug bedient werden. Das System 1 ist also Schwarzstartfähig. Im Falle eines Stromausfalls kann das System 1 auch ohne fremdes zutun den Energierückgewinnungszyklus bzw. Energiebereitstellungszyklus starten. Hierfür werden die Ventile wie auch beim normalen Start geschaltet. Zum Schalten der Ventile wird hierbei auf den Notenergiespeicher zurückgegriffen. Sollte dieser nicht ausreichend Energie zur Verfügung haben, können die Ventile auch manuell entsprechend geschaltet werden. Sobald der erste Energiebereitstellungszyklus begonnen hat wird ausreichend elektrische Energie für den Betrieb des Systems 1 bereitgestellt, um autonom auf die weiteren Energiebereitstellungszyklen umzuschalten.

Die Flüssigkeitsbehälter 2, 3, 4 müssen jedoch nicht zwingen wie in den Figuren anschaulich dargestellt angeordnet sein. Sie können auch platzsparend beieinanderstehen, oder so angeordnet sein, wie es entsprechend den landschaftlichen Gegebenheiten vorteilhaft ist. Sie können auch unterschiedliche Formen haben. So können sie rechteckig bzw. kubisch, aber auch kugelförmig oder zylindrisch sein. Auch ist es z.B. möglich, dass ein z.B. zylindrischer Behälter in mehrere, z.B. in drei Segmente unterteilt ist, wobei jedes Segment, wie ein hier beschriebener Flüssigkeitsbehälter agiert. Damit kann eine extrem kurze Rohrleitungsführung erreicht werden und dementsprechend der Rohrwiderstand optimiert bzw. verringert werden.

Auch wenn in den Figuren für jede Turbineneinheit 6, 7, 8 eine separate Peltonturbine 9 dargestellt ist, können diese drei Peltonturbinen 9 auch in einer einzigen Peltonturbine 9, zusammengefasst sein. In diesem Fall wird die einzige (zentrale) Peltonturbine 9 mit Hilfe der Turbineneinheiten 6, 7, 8 bedient. Diese Ausbildungsform des Systems 1 kann zu kürzeren, wenn gut abgestimmt kaum merkbaren, An- und Auslaufphasen zwischen den Energiebereitstellungszyklen führen.

Die Anzahl der Energiebreistellungszyklen, die das System 1 ohne neuerliche Aufladung des Druckspeichers 29 bereitstellen kann, hängt letztendlich von der Menge des Gases ab, die in dem Druckspeicher 29 mit dem Speicherdruck P2 gespeichert ist.

Figur 5 zeigt eine Arbeitsgas-Bereitstellungseinheit 25 des Systems 1, für die Verwendung in mariner Umgebung, also mit Meerwasser als Verdichtungsflüssigkeit 50. Das Meerwasser 50 kann durch eine Öffnung 55 im Verdichtungsbehälter 28 in diesen ein und ausströmen. Die Öffnung 55 kann mit einem Filter (nicht dargestellt) versehen sein, der Fische und Treibgut fernhält. Neben dem Meerwasser 50 befindet sich auch Luft als Arbeitsgas 26 im Verdichtungsbehälter 28. Bedingt durch den Wellengang und durch den Tidenhub strömt das Meerwasser 50 durch die Öffnung 55 in oder aus den Verdichtungsbehälter und wirkt auf das darin befindliche Arbeitsgas 26. Das Arbeitsgas 26 kann durch ein Durchflussventil 57 in einen Wasserabscheider 59 gelangen. Je stärker die Wellen sind bzw. der Wellengang ist, desto mehr Verdichtungsflüssigkeit 50 wird mit dem Arbeitsgas 26 in den Wasserabscheider 59 schwappen. Durch den schiefen Boden des Wasserabscheiders 59 sammelt sich die nach oben geschwappte Verdichtungsflüssigkeit 50 nahe beim Abscheideventil 57. Beim Erreichen einer bestimmten Füllhöhe der Verdichtungsflüssigkeit 50 im Wasserabscheider 59, die mittels nicht dargestellten Sensoren gemessen wird, öffnet sich kurzzeitig das Abscheideventil 58, sodass die Verdichtungsflüssigkeit 50 vollständig oder zumindest teilweise abfließen kann. Es kann hierfür eine minimale Füllhöhe vorgesehen sein, die nicht unterschritten wird, um Druckverluste zufolge eines zu langen Öffnens des Abscheideventils 57 zu vermeiden. Im Normalbetrieb strömt also das Arbeitsgas 26 vom Verdichtungsbehälter 28 in den Wasserabscheider 59 bzw. gibt an das dortige Arbeitsgas 26 den Druck weiter. Ein erstes Einweg-Ventil 53 verbindet den Wasserabscheider 59 mit dem Druckspeicher 29. Bei einem System 1 ohne Wasserabscheider 59 würde das erste Einweg-Ventil 53 in äquivalenter Form den Verdichtungsbehälter 28 mit dem Druckspeicher 29 verbinden. Erreicht das Arbeitsgas 26 im Wasserabscheider 59 bzw., wenn es keinen Wasserabscheider 59 gäbe, im Verdichtungsbehälter 28 einen entsprechenden Druck, kann es durch das erste Einweg-Ventil 53 und entsprechende Rohrleitungen oder ähnliches in den Druckspeicher 29 gelangen. Hier wird es mit einem Speicherdruck P2 gespeichert. Durch ein zweites Einwegventil 54, das einerseits mit der Umgebung und andererseits mit dem Verdichtungsbehälter 28 verbunden ist, kann Umgebungsluft als Arbeitsgas 26 in den Verdichtungsbehälter 28 einströmen. Das passiert, wenn beispielsweise zufolge eines Wellentals der Druck im Verdichtungsbehälter 28 niedriger ist, als der Umgebungsdruck. Dies kann aber auch beispielsweise bei Ebbe geschehen. Hier überlagern sich die Druckänderungen zufolge der Gezeiten, also des Tidenhub, und die Druckänderungen zufolge von Wellen. Das zweite Einweg-Ventil 54 erlaubt es, beide Phänomene gleichzeitig zu nutzen. So kann, wie in der allgemeinen Beschreibung erörtert, durch die regelmäßige Anpassungsmöglichkeit an den Umgebungsdruck die längerfristige große Druckänderung zufolge des Tidenhubs genutzt werden, während die kleinen Druckänderungen um einen momentanen Mittelwert, zufolge von Wellen, ebenfalls genutzt werden. Einen weiteren Freiheitsgrad zum Optimieren der Druckverhältnisse stellt das Arbeitsgas-Rückleitungssystem 39 dar. Durch das Arbeitsgas-Rückleitungssystem 39 kann, wie beschrieben, das Arbeitsgas 26 nach einem Energiebereitstellungszyklus zurück geführt werden. Dieses Arbeitsgas 26 kann beispielsweise direkt in den Druckspeicher 29 geführt werden, zum Beispiel, wenn dieser bereits einen Druck aufweist, der unter dem Arbeitsgasdruck P1 liegt. Alternativ kann aber auch das Arbeitsgas 26 oder ein Teil davon in den Verdichtungsbehälter 28 geleitet werden. Dies kann einerseits passieren, um die Effizienz des Systems 1 hoch zu halten, weil so weniger Energie benötigt wird, als wenn das Arbeitsgas 26 erneut komprimiert werden müsste. Andererseits kann es auch verwendet werden, um die Eigenschaften des Systems 1 vielseitig zu halten und situationsabhängig optimiert zu arbeiten. So kann das Arbeitsgas 26 beispielsweise bei Ebbe und einem relativ vollen Druckspeicher mittels Arbeitsgas-Rückleitungssystem 39 in den Verdichtungsbehälter 28 geleitet werden, sodass mit der nächsten Flut sehr hohe Drücke erzeugt werden können, die noch im bereits relativ vollen Druckspeicher gespeichert werden können. Alternativ kann bei Flut Arbeitsgas 26 in den Verdichtungsbehälter 28 geleitet werden, sodass die mittlere Füllhöhe der Verdichtungsflüssigkeit 50 bei Flut dieselbe wie bei Ebbe ist. Noch mehr Optimierungsmöglichkeiten bei der Einstellung der Drückverhältnisse erhält man, wenn der Druckspeicher 29 eine Anzahl von parallel geschalteten Arbeitsgasspeichereinheiten 29a, 29b, 29c aufweist und eine Arbeitsgasverteilereinheit 29d vorgesehen ist, wie es in Figur 6 gezeigt ist, was natürlich auch bei der in Figur 5 präsentierten Ausführungsform angewendet werden kann.

Die Gliederung in kleinere Arbeitsgasspeichereinheiten 29a, 29b, 29c kann insbesondere deshalb von Vorteil sein, da die kleineren Arbeitsgasspeichereinheiten 29a, 29b, 29c (auch Kessel genannt) rascher befüllt werden können, als ein einziger relativ großer Druckspeicher 29, und damit der Strombedarf früher bedient werden kann.

Im Übrigen sei festgehalten, dass der Verdichtungsbehälter wesentlich höher ausgebildet sein kann, als in der Figur 5 schematisch dargestellt, wie z.B. ca. 15 Meter.

Figur 6 zeigt eine Arbeitsgas-Bereitstellungseinheit 25 des Systems 1, für fließende Gewässer mit einem Druckspeicher 29 der eine Anzahl von Arbeitsgasspeichereinheiten 29a, 29b, 29c aufweist. Hier wird also fließendes Wasser als Verdichtungsflüssigkeit 50 verwendet. Die Verdichtungsflüssigkeit 50 kann durch ein Zu- und Ableitungssystem 56 in den Verdichtungsbehälter 28, mit dem das Zu- und Ableitungssystem 56 verbunden ist, ein und ausfließen, wobei das Zu- und Ableitungssystem 56 entsprechende Ventile, Aktoren, Sensoren und eine entsprechende Steuerung, die in diesem Fall ein Teil der Steuereinheit 52 ist, aber auch als eigenständige Steuereinheit ausgebildet sein könnte, aufweist. Durch das Zu- und Ableitungssystem 56 bzw. durch dessen Zuleitung wird die Verdichtungsflüssigkeit 50 solange in den Verdichtungsbehälter 28 geleitet, bis eine gewünschte Füllhöhe, bzw. gewünschte Druckverhältnisse erreicht sind. Der Druck im Verdichtungsbehälter 28 kann wie auch beim System 1 für Meerwasser in den weiteren Schritten gespeichert und genutzt werden. Hierfür fließt das Arbeitsgas 26 durch das erste Einweg-Ventil 53 und einer entsprechenden Verrohrung oder ähnliches in den Druckspeicher 29, wobei hier der Druckspeicher 29 die Arbeitsgasspeichereinheiten 29a, 29b, 29c aufweist, auf die noch eingegangen wird. Die Arbeitsgas-Bereitstellungseinheit 25 weist auch hier ein zweites Einweg-Ventil 54 auf, das mit der Umgebung und mit dem Verdichtungsbehälter 28 verbunden ist, und es insbesondere im Normalbetrieb erlaubt, dass Umgebungsluft als Arbeitsgas 26 in den Verdichtungsbehälter 28 einströmt, wenn die Druckverhältnisse das zulassen, also wenn der Druck im Verdichtungsbehälter 28 geringer ist als der Umgebungsdruck. Weiterhin weist die Arbeitsgas-Bereitstellungseinheit 25 ebenfalls ein Arbeitsgas-Rückleitungssystem 39 auf, dass es ermöglicht das rückgeführte Arbeitsgas 26 in dem Druckspeicher 29 bzw. in einem seiner Arbeitsgasspeichereinheiten 29a, 29b, 29c zu speichern oder es in den Verdichtungsbehälter 28 zu leiten, um dort andere Druckverhältnisse zu erzeugen. Durch das Zu- und Ableitsystem 56, konkret durch die Ableitung, kann die Verdichtungsflüssigkeit 50 auch wieder abgeleitet werden. Die Energie des fließenden Gewässers kann also beispielsweise so genutzt werden, dass das Wasser durch das Zu- und Ableitsystem 56 in den Verdichtungsbehälter 28 strömt und dort auf das darin befindliche Arbeitsgas 26 wirkt. Das Arbeitsgas 26 wird somit durch das erste Einweg-Ventil 53 in den Druckspeicher 29 gedrückt, von wo aus es wie beschrieben für die Energiebereitstellung genutzt werden kann. Nach Erreichen einer gewünschten Füllhöhe oder eines gewünschten Drucks, wird die Zuleitung des Zu- und Ableitsystems 56 verschlossen, während dessen Ableitung freigegeben wird. Nun strömt die Verdichtungsflüssigkeit 50 heraus, womit bei entsprechenden Druckverhältnissen, das zweite Einweg-Ventil 54 öffnet und Umgebungsluft als Arbeitsgas 26 einströmen lässt. Alternativ könnte auch das Arbeitsgas 26 aus dem Arbeitsgas-Rückleitungssystem 39 in den Verdichtungsbehälter 28 geleitet werden, wenn die Druckverhältnisse das fordern. Die Notwendigkeit auch höhere Drücke zu erzeugen entsteht insbesondere dann, wenn der Druckspeicher 29 nur aus einer einzigen Kammer besteht, und diese, beispielsweise wegen geringer Energienachfrage stark gefüllt werden muss.

Das System 1, bzw. die Arbeitsgas-Bereitstellungseinheit 25 lässt sich sowohl für Meerwasser als auch für fließende Gewässer mit einem einzelnen Druckspeicher 29 mit nur einer Kammer auslegen. In beiden Fällen ist es jedoch vorteilhaft, wenn Druckspeicher 29 eine Anzahl von parallel geschalteter Arbeitsgasspeichereinheiten 29a, 29b, 29c aufweist und eine Arbeitsgasverteilereinheit 29d vorgesehen ist. In Figur 6 sind drei Arbeitsgasspeichereinheiten 29a, 29b, 29c solche dargestellt, es kann jedoch sinnvoll sein, wesentlich mehr zu verwenden und auch eine Variante mit zweien ist möglich. Auch unterschiedliche Größen sind möglich. Die Arbeitsgasverteilereinheit 29d besteht aus Ventilen und Rohren oder ähnlichen und verbindet einerseits das erste Einweg-Ventil 53 mit den Arbeitsgasspeichereinheit 29a, 29b, 29c eingangsseitig und andererseits ausgangsseitig die Arbeitsgasspeichereinheit 29a, 29b, 29c mit dem Arbeitsgas-Zuleitungssystem 27, wobei es dazwischen jeweils Ventile aufweist die so geschalten werden können, dass das zu speichernde Arbeitsgas 26, immer in eine optimale Arbeitsgasspeichereinheit 29a, 29b, oder 29c gespeichert wird, wobei optimal bedeutet, dass der Druck in der Arbeitsgasspeichereinheit 29a, 29b, oder 29c auf jeden Fall niedriger ist, als der Druck des zu speichernden Arbeitsgases 26. Weiterhin kann optimal bedeuten, dass es sich um die Arbeitsgasspeichereinheit 29a, 29b, oder 29c handelt, bei der die wenigsten Verluste auftreten, wenn das Arbeitsgas 26 darin gespeichert wird. Die Arbeitsgasverteilereinheit 29d ist stellvertretend für den Druckspeicher 29 mit dem Arbeitsgas-Rückleitungssystem 39 verbunden, sodass das rückgeführte Arbeitsgas 26 beispielsweise in einem der Arbeitsgasspeichereinheit 29a, 29b, oder 29c gespeichert werden kann. Diese Arbeitsgasspeichereinheit 29a, 29b, oder 29c kann anschließend weiter befüllt werden, um den Speichergasdruck P2 zu erreichen. Die Arbeitsgasspeichereinheit 29a, 29b, oder 29c erlauben es also, dass auch Drücke weit unter dem Speichergasdruck P2 gespeichert werden, wobei die jeweilige Arbeitsgasspeichereinheit 29a, 29b, oder 29c dann weiter befüllt werden kann, bis der Speichergasdruck P2 erreicht ist. So kann der Speichergasdruck P2 also beispielsweise nur in einem oder ein paar Arbeitsgasspeichereinheiten 29a, 29b, oder 29c herrschen, während die anderen Arbeitsgasspeichereinheiten 29a, 29b, oder 29c befüllt werden.

Bei der Verwendung von Meerwasser als Verdichtungsflüssigkeit 50 kann die Verwendung von Arbeitsgasspeichereinheiten 29a, 29b, oder 29c also beispielsweise so aussehen, dass bei Ebbe die Druckänderung zufolge von Wellen, sowie die Rückführung des Arbeitsgases 26 nach Energiebereitstellungszyklen, dazu genutzt wird die Arbeitsgasspeichereinheiten 29a, 29b, oder 29c bis auf einen gewissen Druck zu befüllen. Dazu wird zuerst eine erste Arbeitsgasspeichereinheit 29a befüllt, bis sie den gewünschten Druck erreicht hat. Anschließend schaltet die Arbeitsgasverteilereinheit 29d so, dass eine zweite Arbeitsgasspeichereinheit 29b befüllt wird, bis sie den gewünschten Druck erreicht hat, usw.. Der gewünschte Druck ist hierbei ungefähr jener, der durch die Wellen erzeugt werden kann. Mit einsetzten der Flut stehen nun einige Arbeitsgasspeichereinheiten 29a, 29b, oder 29c bereit, die bereits zum Teil gefüllt sind. Die hohen Drücke, die durch die Flut bereitgestellt werden, können nun verwendet werden, um zumindest einen Teil der Arbeitsgasspeichereinheiten 29a, 29b, oder 29c vollständig zu befüllen. Bereits gefüllte Arbeitsgasspeichereinheiten 29a, 29b, oder 29c können zeitgleich verwendet werden, um Energiebereitstellungszyklen anzutreiben.

Die Arbeitsgasspeichereinheiten 29a, 29b, 29c oder der Druckspeicher 29 generell können auch als Pipelines also als Rohre ausgelegt sein, sodass der Verdichtungsbehälter 28 und die Flüssigkeitsbehälter 2, 3, 4 relativ weit weg voneinander platziert sein können. So kann der Verdichtungsbehälter 28 auf einem Berg platziert sein um mit relativ geringen Eingriff in das Landschaftsbild Energie aus fließenden Gewässern zu gewinnen, während im Tal die Flüssigkeitsbehälter 2, 3, 4 für die Energiebereitstellung bereitstehen. Der Verdichtungsbehälter 28 kann aber auch platzsparend an einem Ufer Energie aus Meerwasser aufnehmen, während Flüssigkeitsbehälter 2, 3, 4 im Landesinneren Energie bereitstellen.

Es wird der Vollständigkeit halber darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. System (1) zur Energiespeicherung und -rückgewinnung (1), das aufweist:
- mehr als zwei Flüssigkeitsbehälter (2, 3, 4) zur Lagerung einer Arbeitsflüssigkeit (51), und
- eine Turbineneinheit (6) zur Stromerzeugung, wobei die Turbineneinheit mindestens zwei Flüssigkeitsbehälter mit einander verbindet und wobei die Turbineneinheit (6) derart mit dem Flüssigkeitsbehälter (2, 3, 4) verbunden ist und derart ausgelegt ist, dass die Arbeitsflüssigkeit (51) durch Einwirkung eines Arbeitsgases (26) auf die Arbeitsflüssigkeit (51) aus dem Flüssigkeitsbehälter (2, 3, 4) heraus und durch die Turbineneinheit (9) beförderbar ist und dabei die Turbineneinheit (9) zwecks Stromerzeugung antreibt, und
- eine Arbeitsgas-Bereitstellungseinheit (25) zur Bereitstellung des Arbeitsgases (26), insbesondere komprimierte Luft, mit einem im Wesentlichen konstanten Arbeitsgasdruck (P1), wobei die Arbeitsgas-Bereitstellungseinheit (25) mit dem Flüssigkeitsbehälter (2, 3, 4) derart verbunden ist, dass das Arbeitsgas (26) mit besagtem konstantem Arbeitsgasdruck (P1) von oben auf die Flüssigkeitsoberfläche der Arbeitsflüssigkeit (51) in dem Flüssigkeitsbehälter (2, 3, 4) einwirkt und in Folge die Arbeitsflüssigkeit (51) durch die Turbineneinheit (6) befördert, wobei die Arbeitsgas-Bereitstellungseinheit (25) aufweist:
- einen Verdichtungsbehälter (28), der zum Verdichten von in ihm befindlichen Arbeitsgas (26) durch in ihn einströmbare Verdichtungsflüssigkeit (50) ausgebildet ist, und
- einen daran mittels eines ersten Einweg-Ventils (53) angeschlossenen Druckspeicher (29), der zum Speichern der verdichteten Arbeitsgases (26) mit einem Speichergasdruck (P2), der höher als der Arbeitsgasdruck (P1) ist, ausgebildet ist,
wobei das Einweg-Ventil (53) derart ausgebildet ist, dass es ein Überströmen der verdichteten Arbeitsgases (26) nur in eine Richtung von dem Verdichtungsbehälter (28) in den Druckspeicher (29) ermöglicht, wenn der Druck des verdichteten Arbeitsgases (26) höher als der Speichergasdruck (P2) ist, wobei
das System derart konfiguriert ist, dass die Arbeitsflüssigkeit (51) der Reihe nach durch alle Flüssigkeitsbehälter (2, 3, 4) hindurch immer nur zwischen zwei Flüssigkeitsbehältern von dem einen Flüssigkeitsbehälter (2, 3, 4) zum nächsten Flüssigkeitsbehälter (2, 3, 4) beförderbar ist.

2. System (1) nach Anspruch 1, wobei die Arbeitsgas-Bereitstellungseinheit (25) ausgangsseitig einen Druckregler (31) aufweist, der zum Erzeugen des im Wesentlichen konstanten Arbeitsgasdrucks (P1) des bereitgestellten Arbeitsgases (26) während der Beförderung der Arbeitsflüssigkeit (51) durch die Turbineneinheit (6) ausgebildet ist.

3. System (1) nach Anspruch einem der Ansprüche 1-2, wobei der Verdichtungsbehälter (28) ein zweites Einweg-Ventil (54) aufweist, das zum Einströmen der Umgebungsluft als Arbeitsgas (26) in den Verdichtungsbehälter (28) bei Vorliegen von dies ermöglichenden Druckverhältnissen dient, insbesondere dann, wenn bedingt durch ein Herausströme der Verdichtungsflüssigkeit (50) aus dem Verdichtungsbehälter (28) ein Unterdruck im Verhältnis zum Umgebungsluftdruck herrscht.

4. System (1) nach einem der vorangehenden Ansprüche, wobei der Druckspeicher (29) eine Anzahl von parallel geschalteter Arbeitsgasspeichereinheiten (29a, 29b, 29c) aufweist und eine Arbeitsgasverteilereinheit (29d) vorgesehen ist, die zum selektiven Befüllen von jeweils nur einer einzigen der Arbeitsgasspeichereinheiten (29a, 29b, 29c) mit komprimierter Umgebungsluft als Arbeitsgas (26) und zum selektiven Bereitstellen des Arbeitsgases (26) aus jeweils nur einer einzigen Arbeitsgasspeichereinheit (29a, 29b, 29c) ausgebildet ist.

5. System (1) nach einem der vorangehenden Ansprüche 1-4, wobei der Verdichtungsbehälter (28) eine bis unter den Meeresspiegel reichende Öffnung (55) aufweist, sodass Meerwasser als die Verdichtungsflüssigkeit (50) bedingt durch die natürliche Wellenbewegung oder den Tidenhub einströmen und wieder herausströmen kann.

6. System (1) nach einem der vorangehenden Ansprüche 1-4, wobei der Verdichtungsbehälter (28) ein Zu- und Ablauf-Leitungssystem (56) aufweist, sodass Fließwasser aus einem, insbesondere alpinen, Wasserspeicher oder einem fließenden Gewässer, insbesondere einem Fluss und dergleichen, als die Verdichtungsflüssigkeit (50) bedingt durch die natürliche Fließbewegung einströmen und wieder herausströmen kann.

7. System (1) nach einem der Ansprüche 1 bis 6, wobei jeder Flüssigkeitsbehälter (2, 3, 4) ein Entlüftungsventil (43, 46, 49) aufweist, das beim Befüllen des Flüssigkeitsbehälters mit Arbeitsflüssigkeit (51) in seinem geöffneten Zustand zum Entlüften des Flüssigkeitsbehälters (2, 3, 4) dient und das in seinem geschlossenen Zustand ein Entweichen des durch die Arbeitsgas-Bereitstellungseinheit (25) eingebrachten Arbeitsgases (26) verhindert.

8. System (1) nach einem der vorangehenden Ansprüche, wobei das System eine Rückführung (39) aufweist, die zum Rückführen des in dem zumindest einen Flüssigkeitsbehälter (2, 3, 4) enthaltenen Arbeitsgases (26) in die Arbeitsgas-Bereitstellungseinheit (25) ausgebildet ist.

9. System (1) nach Anspruch 8, das derart ausgebildet ist, dass die Rückführung (39) in den Verdichtungsbehälter (28) mündet.

10. System (1) nach Anspruch 8, das derart ausgebildet ist, dass die Rückführung (39) in den Druckspeicher (29) mündet.

11. System (1) nach einem der vorangehenden Ansprüche, das zumindest zwei Flüssigkeitsbehälter (2, 3, 4) aufweist, die im Wesentlichen auf gleichem Niveau positioniert sind.

12. System (1) nach einem der vorangehenden Ansprüche, wobei der Druckspeicher zumindest teilweise, insbesondere im Wesentlichen vollständig, als Pipeline ausgebildet ist.

## Claims

1. System (1) for energy storage and recovery (1), comprising:
- more than two fluid containers (2, 3, 4) for storing a working fluid (51), and
- a turbine unit (6) for generating electricity, wherein the turbine unit connects at least two fluid containers to each other and wherein the turbine unit (6) is connected to the fluid container (2, 3, 4) and is designed in such a way that the working fluid (51) can be transported out of the fluid container (2, 3, 4) and through the turbine unit (9) by the action of a working gas (26) on the working fluid (51), thereby driving the turbine unit (9) for the purpose of generating electricity, and
- a working gas supply unit (25) for supplying the working gas (26), in particular compressed air, at a substantially constant working gas pressure (P1), wherein the working gas supply unit (25) is connected to the fluid container (2, 3, 4) in such a way that the working gas (26) with said constant working gas pressure (P1) acts from above on the liquid surface of the working fluid (51) in the fluid container (2, 3, 4) and consequently conveys the working fluid (51) through the turbine unit (6), wherein the working gas supply unit (25) comprises:
- a compression container (28) which is designed to compress the working gas (26) located therein by means of a compression liquid (50) which can flow into it, and
- a pressure accumulator (29) connected thereto by means of a first one-way valve (53), which is designed to store the compressed working gas (26) at a storage gas pressure (P2) higher than the working gas pressure (P1),
wherein the one-way valve (53) is designed such that it allows the compressed working gas (26) to flow in only one direction from the compression container (28) into the pressure accumulator (29) when the pressure of the compressed working gas (26) is higher than the storage gas pressure (P2), wherein the system is configured such that the working fluid (51) can be transported sequentially through all fluid containers (2, 3, 4) only between two fluid containers, from one fluid container (2, 3, 4) to the next fluid container (2, 3, 4).

2. System (1) according to claim 1, wherein the working gas supply unit (25) has a pressure regulator (31) on the outlet side, which is designed to generate the essentially constant working gas pressure (P1) of the supplied working gas (26) during the transport of the working fluid (51) through the turbine unit (6).

3. System (1) according to one of claims 1-2, wherein the compression container (28) has a second one-way valve (54) which serves to allow ambient air to flow into the compression container (28) as working gas (26) when pressure conditions permitting this are present, in particular when, due to an outflow of the compression liquid (50) from the compression container (28), a negative pressure prevails in relation to the ambient air pressure.

4. System (1) according to one of the preceding claims, wherein the pressure accumulator (29) has a number of working gas storage units (29a, 29b, 29c) connected in parallel and a working gas distribution unit (29d) is provided, which is designed to selectively fill only one of the working gas storage units (29a, 29b, 29c) with compressed ambient air as working gas (26) and for selectively supplying the working gas (26) from only one single working gas storage unit (29a, 29b, 29c) at a time.

5. System (1) according to one of the preceding claims 1-4, wherein the compression container (28) has an opening (55) extending below sea level so that seawater can flow in and out as the compression liquid (50) due to natural wave motion or tidal movement.

6. System (1) according to one of the preceding claims 1-4, wherein the compression container (28) has an inlet and outlet pipe system (56) so that flowing water from a water reservoir, in particular an alpine water reservoir, or a flowing body of water, in particular a river and the like, can flow in and out again as the compression liquid (50) due to the natural flow movement.

7. System (1) according to any one of claims 1 to 6, wherein each fluid container (2, 3, 4) has a vent valve (43, 46, 49) which, when the fluid container is filled with working fluid (51), serves in its open state to vent the fluid container (2, 3, 4) and, in its closed state, prevents the working gas (26) introduced by the working gas supply unit (25) from escaping.

8. System (1) according to one of the preceding claims, wherein the system has a return line (39) which is designed to return the working gas (26) contained in the at least one fluid container (2, 3, 4) to the working gas supply unit (25).

9. System (1) according to claim 8, which is designed such that the return line (39) opens into the compression container (28).

10. System (1) according to claim 8, which is designed such that the return line (39) opens into the pressure accumulator (29).

11. System (1) according to one of the preceding claims, which has at least two fluid containers (2, 3, 4) that are positioned essentially at the same level.

12. System (1) according to one of the preceding claims, wherein the pressure accumulator is designed at least partially, in particular substantially completely, as a pipeline.

## Revendications

1. Système (1) de stockage et de récupération d'énergie (1) comprenant:
- plus de deux récipients de liquide (2, 3, 4) destinés au stockage d'un liquide de travail (51), et
- une unité de turbine (6) pour la production d'électricité, l'unité de turbine reliant au moins deux récipients de liquide et l'unité de turbine (6) étant reliée au récipient de liquide (2, 3, 4) et étant conçue de telle sorte que le liquide de travail (51) puisse être transporté hors du récipient de liquide (2, 3, 4) et à travers l'unité de turbine (9) par l'action d'un gaz de travail (26) sur le liquide de travail (51), entraînant ainsi l'unité de turbine (9) en vue de la production d'électricité, et
- une unité d'alimentation en gaz de travail (25) pour fournir le gaz de travail (26), notamment l'air comprimé, à une pression de gaz de travail (P1) sensiblement constante, l'unité d'alimentation en gaz de travail (25) étant reliée au récipient de liquide (2, 3, 4) de telle sorte que le gaz de travail (26) agisse par le haut sur la surface de liquide du liquide de travail (51) dans le récipient de liquide (2, 3, 4) à ladite pression de gaz de travail (P1) constante et, en conséquence, transporte le liquide de travail (51) à travers l'unité de turbine (6), l'unité d'alimentation en gaz de travail (25) comprenant:
- un récipient de compression (28) conçu pour comprimer le gaz de travail (26) situé dans celui-ci par un liquide de compression (50) pouvant s'écouler dans celui-ci, et
- un accumulateur de pression (29) raccordé à celui-ci au moyen d'une première soupape unidirectionnelle (53) et conçu pour stocker le gaz de travail (26) comprimé à une pression de gaz de stockage (P2) supérieure à la pression de gaz de travail (P1), la soupape unidirectionnelle (53) étant conçue de telle sorte qu'elle ne permette le
débordement du gaz de travail (26) comprimé que dans une seule direction, du récipient de compression (28) vers l'accumulateur de pression (29), lorsque la pression du gaz de travail (26) comprimé est supérieure à la pression de gaz de stockage (P2),
le système étant configuré de telle sorte que le liquide de travail (51) puisse être transporté séquentiellement à travers tous les récipients de liquide (2, 3, 4), toujours uniquement entre deux récipients de liquide, d'un récipient de liquide (2, 3, 4) à l'autre récipient de liquide (2, 3, 4).

2. Système (1) selon la revendication 1, dans lequel l'unité d'alimentation en gaz de travail (25) comporte un régulateur de pression (31) sur le côté sortie, qui est conçu pour créer la pression de gaz de travail (P 1) sensiblement constante du gaz de travail (26) prévu lors du transport du liquide de travail (51) à travers l'unité de turbine (6).

3. Système (1) selon l'une des revendications 1-2, dans lequel le récipient de compression (28) comporte une deuxième soupape unidirectionnelle (54) qui sert à l'influx de l'air ambiant en tant que gaz de travail (26) dans le récipient de compression (28), lorsqu'il y a des conditions de pression permettant cela, notamment lorsqu'il y a une pression négative par rapport à la pression barométrique en raison d'une sortie du liquide de compression (50) hors du récipient de compression (28).

4. Système (1) selon l'une des revendications précédentes, dans lequel l'accumulateur de pression (29) comprend un certain nombre d'unités de stockage de gaz de travail (29a, 29b, 29c) connectées en parallèle et une unité de distribution de gaz de travail (29d) est prévue, qui est conçue pour remplir sélectivement une seule des unités de stockage de gaz de travail (29a, 29b, 29c) à la fois avec de l'air ambiant comprimé en tant que gaz de travail (26) et pour fournir sélectivement le gaz de travail (26) à partir d'une seule unité de stockage de gaz de travail (29a, 29b, 29c) à la fois.

5. Système (1) selon l'une des revendications 1-4 précédentes, dans lequel le récipient de compression (28) comporte une ouverture (55) s'étendant jusqu'en dessous de la surface de la mer afin que l'eau de mer puisse circuler à l'intérieur et à l'extérieur en tant que liquide de compression (50), en raison du mouvement naturel des vagues ou du marnage.

6. Système (1) selon l'une des revendications 1-4 précédentes, dans lequel le récipient de compression (28) comporte un système de tuyauterie d'entrée et de sortie (56) afin que l'eau courante provenant d'un réservoir d'eau, notamment alpin, ou d'une masse d'eau courante, notamment d'une rivière et similaires, puisse circuler à l'intérieur et à l'extérieur en tant que liquide de compression (50), en raison du mouvement naturel du flux.

7. Système (1) selon l'une des revendications 1 à 6, dans lequel chaque récipient de liquide (2, 3, 4) comporte une soupape d'échappement (43, 46, 49) qui, lorsque le récipient de liquide est rempli de liquide de travail (51), sert, dans son état ouvert, à désaérer le récipient de liquide (2, 3, 4) et, dans son état fermé, empêche la fuite du gaz de travail (26) introduit par l'unité d'alimentation en gaz de travail (25).

8. Système (1) selon l'une des revendications précédentes, dans lequel le système comporte un retour (39) conçu pour recirculer le gaz de travail (26) contenu dans l'au moins un récipient de liquide (2, 3, 4) vers l'unité d'alimentation en gaz de travail (25).

9. Système (1) selon la revendication 8, conçu de telle sorte que le retour (39) débouche dans le récipient de compression (28).

10. Système (1) selon la revendication 8, conçu de telle sorte que le retour (39) débouche dans l'accumulateur de pression (29).

11. Système (1) selon l'une des revendications précédentes, comprenant au moins deux récipients de liquide (2, 3, 4) positionnés sensiblement au même niveau.

12. Système (1) selon l'une des revendications précédentes, dans lequel l'accumulateur de pression est conçu au moins partiellement, en particulier sensiblement entièrement, comme un pipeline.
